# EUROPEAN PATENT SPECIFICATION

(11) **EP 0 642 727 B1**
(45) Date of publication and mention of the grant of the patent: **14.08.1996**
(21) Application number: 93911847.7
(22) Date of filing: 21.04.1993
(51) Int. Cl.: H05B 37/02, H02J 13/00

(54) **APPARATUS FOR CONTROLLING ELECTRICAL LOADS**
GERÄT ZUR STEUERUNG VON ELEKTRISCHEN LASTEN
APPAREIL DE COMMANDE DE CHARGES ELECTRIQUES

(30) Priority: 21.04.1992 US 871860
(43) Date of publication of application: 15.03.1995
(73) Proprietor: PPB LIMITED, Harbour City, Kowloon (HK)
(72) Inventor: HETRAKUL, Praphrudhi, Prakanong Bangkok 10110 (TH); AMORNVITIKIVACHA, Prateep, Prakanong Bangkok 10110 (TH); MANASIRIMONGKOL, Boonruang, Prakanong Bangkok 10110 (TH)
(74) Representative: Tomlinson, Kerry John
(86) International application number: GB9300830
(87) International publication number: WO9321745

(56) References cited:
- EP-A- 0 361 734
- EP-A- 0 435 224
- WO-A-89/05562
- US-A- 5 059 871
- US-A- 5 086 385
- US-A- 5 191 265

## Description

The present invention relates to apparatus for controlling electrical loads, and relates particularly though not exclusively to apparatus for installation in buildings to allow lighting, heating and other circuits to be controlled.

The conventional system for providing lighting in a room of a building is by means of an electrical circuit which includes a source of power (mains electricity supply or generator), a light, a switch, and electrical power cables linking these circuit components. In a private dwelling the light switch will typically be located quite near the light. In larger buildings the light switch may be some distance from the light, an extreme example being buildings such as factories where all the widely separated lights can be controlled from a single switchboard.

Proposals have in the past been made for providing a system for controlling the lighting of a building. One approach, illustrated for example by US4,240,011, US 4,388,567 and US 4,716,344 has been to use a centralized control system such as a computer. Such arrangements, while providing control, do not offer much flexibility and are quite complex. US 5,059,871 illustrates an alternative approach in which control of the system is distributed to a series of input control units communicating via a network. In this arrangement, however, all control units are connected directly to a single communications network. When a large number of units are provided this can cause congestion on the network requiring sophisticated, and therefore expensive, communications hardware and software.

According to the present invention there is provided apparatus for controlling a number of electrical loads comprising an electrical switch for each load, a network of telecommunication lines including a connection to each electrical switch, command input stations connected to the telecommunication network, and control means whereby a command entered at one of said input stations travels along the network and operates a switch thereby switching on or off a load, wherein said network comprises a plurality of network modules connected to each other by a main telecommunication line, each module comprising a said input station and one or more of said switches, characterised in that in the case of commands from an input station to one of said switches within the same module said control means is adapted to send these commands from the input station to that switch without entering the command on the main communication line and wherein in the case of commands from an input station to one of said switches within a different module, said control means is adapted to enter the command onto the main communication line.

The apparatus according to the invention has many advantages over the conventional systems. Firstly, because a network is used, instructions entered at any one of the input stations can switch any or all loads connected to the network. Secondly, the switch for a particular load can be located in physically close proximity to the load thereby reducing the amount of electrical cable required and thus reducing the expense of installation. Thirdly, reducing the amount of electrical cable enhances the safety of the system. Fourthly, the use of a network allows extra input stations and switches to be easily added to the system. Fifthly, the use of a telecommunication network allows instructions to be entered by non-manual means, for example through telephones or by computers connected to the network. Sixthly, commands may be transmitted over large distances.

By using a modular form of telecommunication network comprising network modules connected in series by a main telecommunication line, a large proportion of commands may be kept within the modules and off the main communication line. This enables the use of simpler and cheaper communications software and hardware. The modular system also allows the system to be expanded easily.

In a preferred construction of the apparatus the transmissions are asynchronous, thus greatly reducing the cost of the hardware.

The commands may be sent in the form of a first or second protocol. The first protocol may contain less information than the second, but may be transmitted faster and may therefore be used for transmitting emergency signals.

The apparatus preferably includes an electrical switch status indicator for indicating the status of the electrical switches. The indicator may take the form of a light emitting diode associated with each key of a keypad used to input commands.

Some embodiments of the invention will now be described with reference to the accompanying drawings, in which:-
Figure 1 is a block diagram of a system in accordance with the invention installed in a private dwelling;
Figure 2 is a block diagram of an alternative system with the output side omitted;
Figure 3 is a block diagram of one module of a system;
Figure 4 is a circuit diagram for the keypad;
Figure 4A is a front view of the keypad;
Figure 4B is a circuit diagram of an alternative circuit for the keypad;
Figure 5 is a circuit diagram of a load switching circuit;
Figure 6 is a circuit diagram of a telephone circuit for connecting a telephone to the system;
Figure 7 is a user chart for entering commands by keypad;
Figure 8 is a user chart for entering commands by telephone;
Figure 9A and 9B together constitute a flowchart illustrating the operation of the keypad;
Figure 10A and 10B together constitute a flowchart illustrating the operation of the telephone circuit; and
Figure 11 is a flowchart illustrating the operation of a module.
Figure 12 shows the command protocol for commands entered on a keypad;
Figure 13 shows the command protocol for commands entered by telephone;
Figure 14 illustrates a first protocol format;
Figure 15 illustrates a second protocol format;
Figure 16 illustrates the transmission of data-using the first protocol in one example;
Figure 17 illustrates the transmission of data using the first protocol as a second example;
Figure 18 illustrates the use of the second protocol;
Figure 19 illustrates a possible system architecture; and
Figure 20 illustrates how a command input station may control the electrical switches.

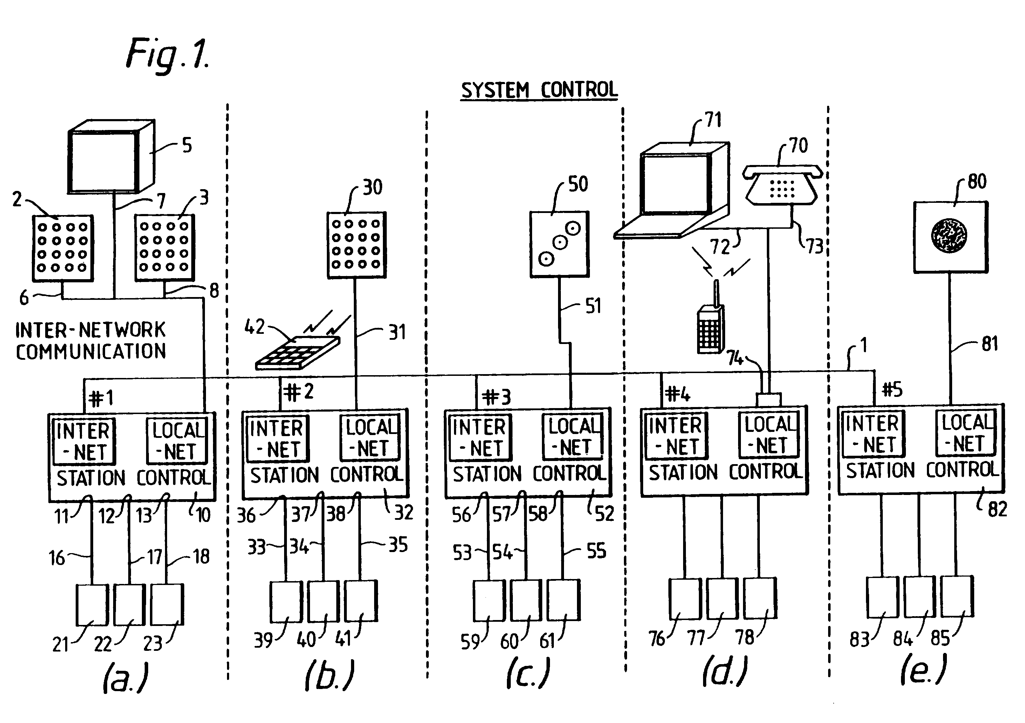

Referring initially to Figure 1 the system comprises five modules designated (a), (b) , (c), (d) and (e) and separated by vertical dashed lines. The modules are linked by main communications line 1.

Module (a) is located in the kitchen, living room and hallway and consists of keypads 2 and 3 out of reach of children, a monitor 5 located in the hallway, local telecommunication lines 6, 7 and 8, a switching circuit 10, switches 11, 12 and 13, power lines 16, 17 and 18 and electrical loads 21, 22 and 23 which may be lights, heaters and the like.

Module (b) is located in an adult bedroom, and consists of a keypad 30 a local telecommunication line 31, a switching circuit 32, three electrical power lines 33, 34, 35, three switches 36, 37, 38 and three loads 39, 40, 41, which may be a light, a heater and an electrical socket. Also shown is a remote controller 42 of the type used to operate a television set, which may have be used to operate the keypad 30 from a distance.

Module (c) is located in a child's room and consists of a keypad 50 with just three keys within reach of the child, a local telecommunication line 51, switching circuit 52, three electrical power lines 53, 54, 55, three switches 56, 57, 58 and three electrical loads 59, 60, 61 consisting of a light and two sockets.

Module (d) is located in an office and consists of a telephone receiver 70 and computer 71, local telecommunication lines 72, 73, an adaptor 74 for converting signals arriving on the telecommunication lines 72, 73 into signals compatible with the system of the invention a switching circuit 75, and loads 76, 77, 78.

Module (e) is located outside the house at the front door and consists of a keypad 80 with just one key, a local telecommunication line 81 and a switching circuit 82 and loads 83, 84 and 85.

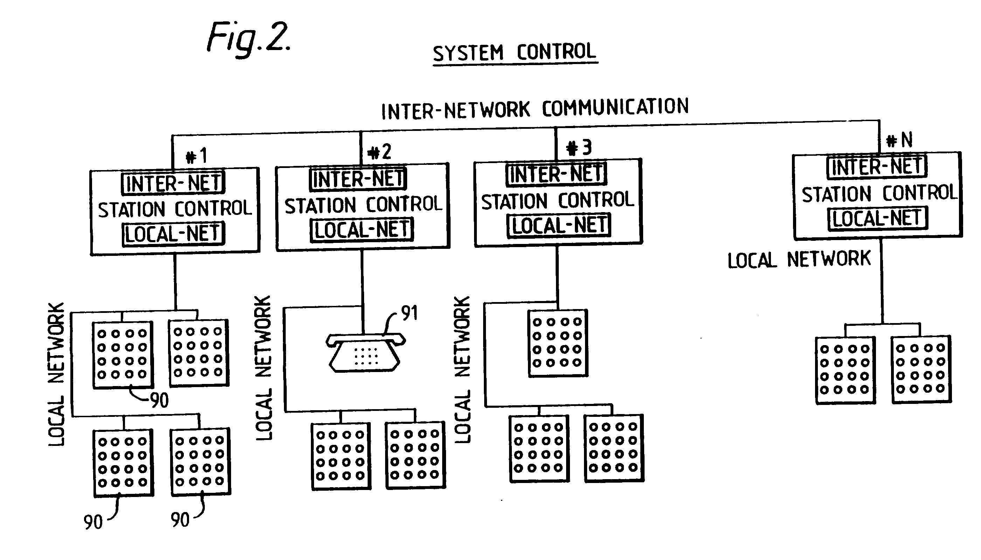

Figure 2 is a block diagram similar to Figure 1, but showing a slightly modified system comprising four modules, designated #1, #2, #3, and the fourth module being designated #N to indicate that any number of modules may be included.

Figure 2 illustrates only the input side of the system comprising keypads 90 and telephone 91.

Some examples of use will now be given. An adult leaving a house can go to the hallway, and using the keypad in the hallway can switch off all the electrical loads in the house, and can check on the monitor that all loads have been switched off.

An adult arriving home can use the keypad in the hallway to switch on selected electrical loads, for example lights and heaters.

A person attacked at the doorway of the house while entering or leaving can switch on all lights by pressing the keypad located at the doorway.

An adult who is in bed reading can switch off the bedroom light and other loads throughout the house without leaving the bed, by using the remote control device to operate the keypad in the bedroom.

A person away from home can switch on and off loads by telephone, calling in on a fixed cable or from a mobile phone.

A child can switch on and off loads in the child's bedroom using the simplified three-key keypad.

Load switching can be controlled by a computer programme. Different programmes may be written for different types of building e.g. bank, restaurant, private dwelling. The computer programme is stored in conventional manner on disc, tape or the like; is loaded into a computer, which may be a personal computer, lap top computer or the like; and the computer is then connected to the system so as to programme the system. Once the system has been programmed the computer may be disconnected and used for other purposes. In the case of a private dwelling the owner may have separate programmes for different seasons of the year, or for when the dwelling is occupied or unoccupied. In the case of larger buildings such as factories, hotels and the like the computer may be left permanently connected.

In addition the use of loads can be monitored by computer. Thus in the case of a hotel, condominium or the like a detailed billing system can be implemented based on actual use of various electrical loads, without the necessity of installing a separate meter for each load, which would be very expensive.

Each keypad comprises an array of keys each of which is made of translucent material and includes a light emitting diode (LED) immediately behind the key. In operation, whenever any of the loads in the same module (for example loads "1", "3" and "6" of the module) are switched on, then the appropriate LED is also switched on, that is to say the LED's behind keys designated "1", "3" and "6". The LED's thus serve as a continuous reminder to the user which loads are switched on. The keypad may also be used in an enquiry mode, by entering enquiries in accordance with a user protocol to enquire the status of loads in other modules, and again the LED's will light up to indicate the status of loads in the other module.

The monitor can be used to read the status of the system in more detail including reading system fault diagnosis produced by the system and reading the history of load switching and other such detailed information.

In addition to allowing remote control, the system also uses less power cable and is therefore less expensive and safer than conventional systems. Thus in the case of the child's bedroom the keypad may be located just inside the door where the light switch is traditionally located but the switching circuit and switches may be located at ceiling level very near the three loads, and there is no requirement to lead a power cable from these loads to the door.

The system may also be more aesthetically pleasing than traditional systems in that only one keypad is required at each switching location, whereas traditional systems often include an unsightly row of switches, one for each different load.

For aesthetic reasons, the householder may wish to replace one keypad by another, in just the same way as householders traditionally replace one switch by another. Replacing one keypad by another involves removing the wiring from the keypad and then attaching the wiring to the new keypad and this is relatively simple, and in particular is much safer than replacing an electrical switch because the householder is handling a low voltage telecommunication circuit instead of a higher voltage power supply circuit.

Adding an extra keypad to the system is much simpler than adding a new electrical switch to a traditional system. Adding a new electrical switch involves installation of a power line which for safety reasons extends within the interior of the wall or is enclosed in a conduit or thick sheathing, and involves damage to the wall when securing the electrical switch to the wall by screws and possibly making a hole in the wall for the power line. In contrast the keypad according to the invention may be secured to the wall by adhesive and the telecommunication line may take the form of a very fine ribbon cable which may be fixed externally to the wall and which is neither dangerous nor unsightly.

Each keypad has its own memory. The keypads may be programmed so that for certain very commonly used loads it is necessary to press just one key. This programming can be easily carried out by the home owner and can be readily changed. For example pressing the "ON" key only may result in several lights and heaters being switched on.

The system illustrated by way of example in Figure 1 is intended for a small private dwelling and illustrates many of the advantages of the invention. However when a system according to the invention is used in other applications further advantages may arise as explained in some more detail in the following paragraphs.

The system may be used to operate an outdoor water sprinkler. A telecommunication line is laid from the dwelling to the water sprinkler, and instructions may be given from the dwelling, either manually or generated by computer. It is not necessary to lay an electrical power line from the house to the sprinkler. Instead a power line may be laid directly from the mains electricity supply or from an outdoor generator. Commands may be given over a considerable distance.

A system according to the invention may also be used in hotels, and the telecommunication network may be used to monitor and switch on and off electric loads such as heaters and lights in guest bedrooms, and may also control the bedroom door combination lock by changing the electronically stored combination, and may also be used to monitor smoke detectors in unoccupied rooms. All of these switching and monitoring operations may be carried out from a central location.

A system in accordance with the invention may be installed in a high security premises, for example an industrial premises and any person visiting such a premises on a temporary basis may be required to carry a signal emitting device, and the signal can then be detected by detectors located in each room and connected to the network, so that the movement of the person through the building can be monitored.

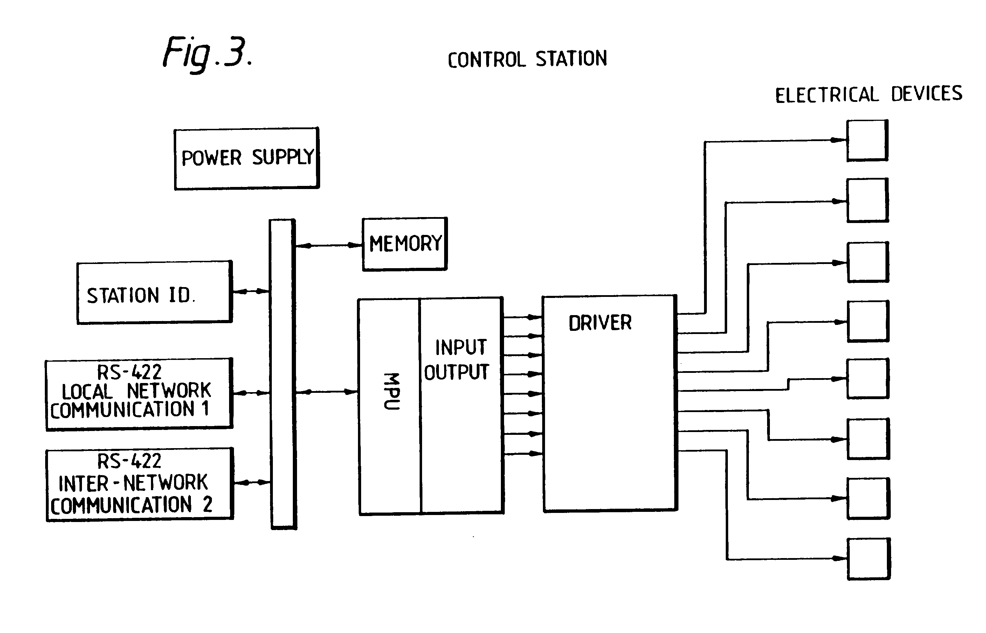

Figure 3 is a block diagram of the control elements of a module comprising a power supply, memory storing th identification of the module, an interface to the local network, an interface to the intercommunications network, a communications cable, a microprocessor, a memory for storing data, an input/output interface, a driver, and electrical switches.

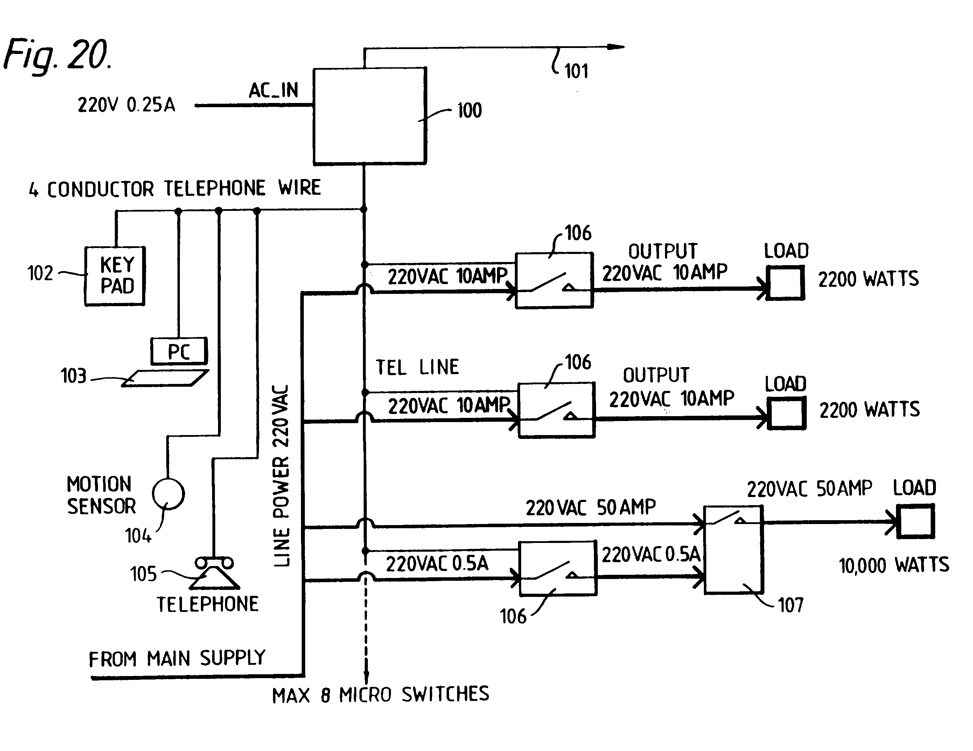

In the embodiment of Figures 1 to 3 the control means and the switches may be physically integrated to form on unit. As shown in Figure 20, however, they may be separatec and this makes it easier to add new loads to an existing system. In Figure 20 the control means 100 receives signals either from the main communication line 101, or from command inputs such as a keypad 102, computer 103, sensor 104, or telephone 105 within its own module, and transmits output signals to microswitches 106 that either control loads directly or in turn operate relays 107.

### DESCRIPTION OF CIRCUIT DIAGRAMS

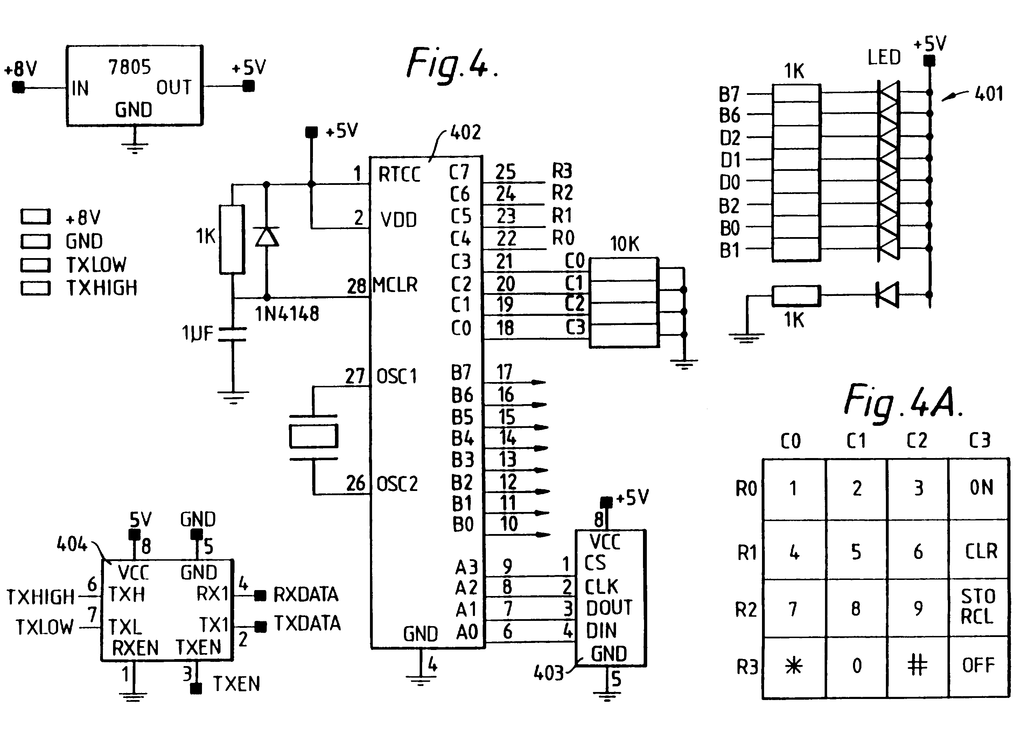

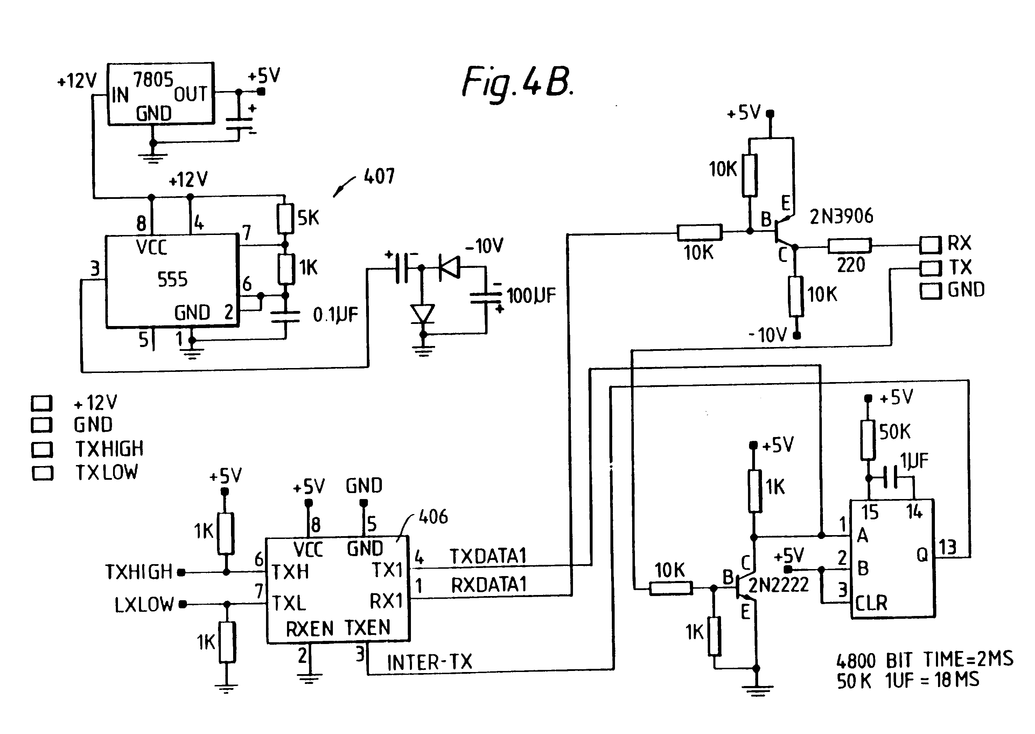

Figure 4 shows the keypad circuit which consists of the keys, light emitting diodes (LED's) 401, central processing unit 402, memory 403, and an interface 404 for transmitting signals onto the local communications line.

Figure 4a illustrates a possible keypad configuration. Figure 4B shows a possible PC adaptor circuit for connecting a personal computer to the network, and includes voltage converter 407, and interface 406.

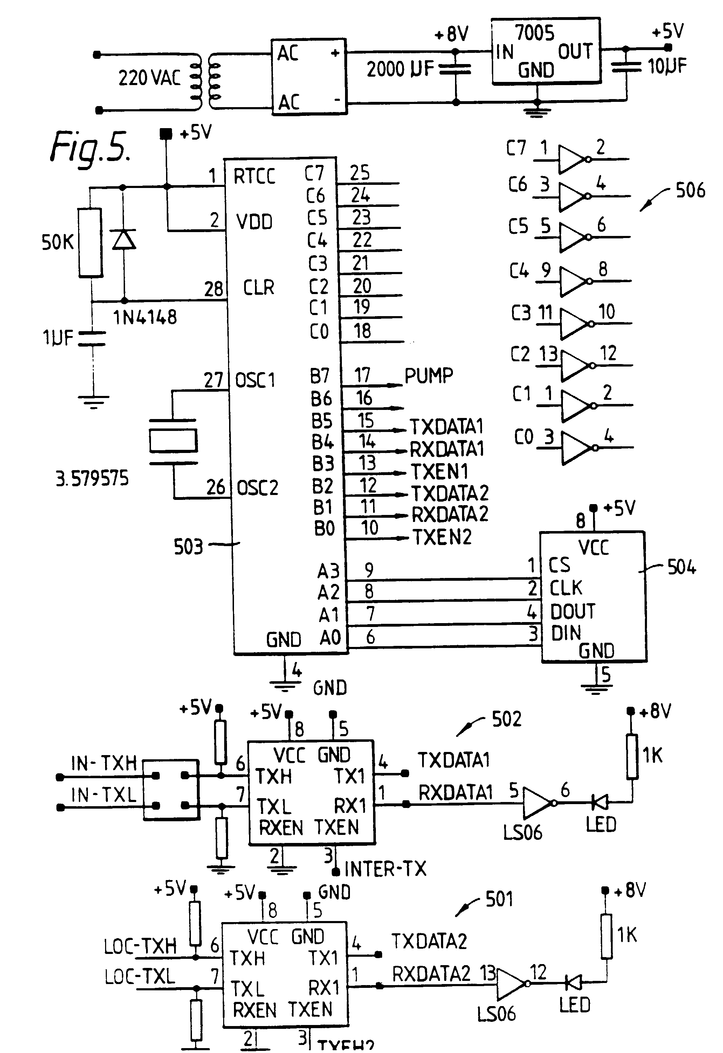

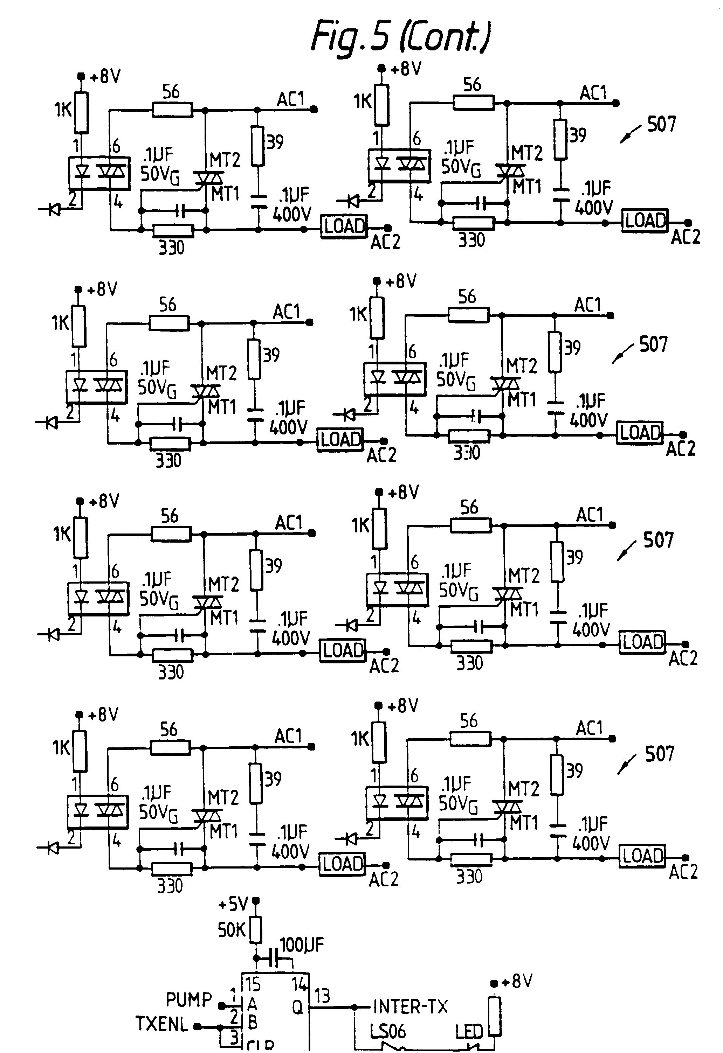

Figure 5 shows a load switching circuit in which the loads are switched by TRIACs. A switching circuit of this type is useful for switching small loads, for example lights. The switching circuit comprises a communication circuit 501 for communicating with the local telecommunication lines, shown as lines LOC-TXH and LOC-TXL connected to pins 6 and 7 of the circuit 501, a communication circuit 502 for communicating with the main communications line shown as lines IN-TXH and IN-TXL connected to pins 6 and 7 of the circuit 502, a central processing unit 503, an address-memory 504 storing the addresses of switches in the module, a memory for storing data arriving on the communications lines, output circuits 506, and TRIAC circuits 507 connected to the output circuits 506 to switch the respective loads.

Instead of TRIAC's, solenoids may be used to switch the loads. A switching circuit of this type is useful for switching larger loads. A solenoid circuit is essentially the same as that illustrated in Figure 5, except that the TRIACs are replaced by solenoids.

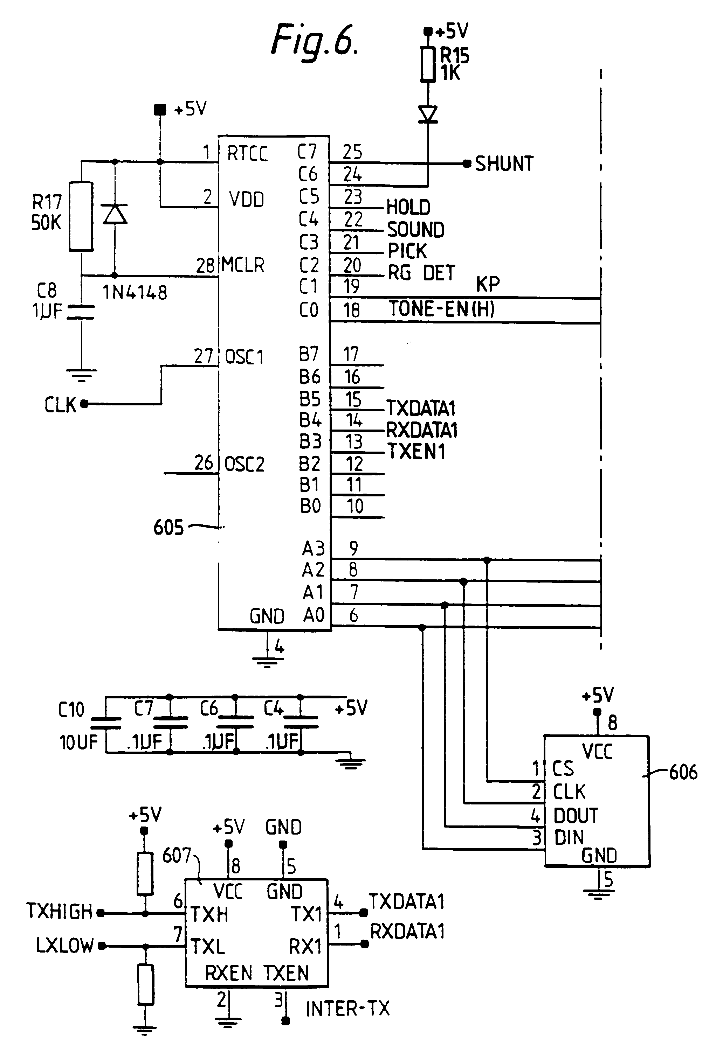

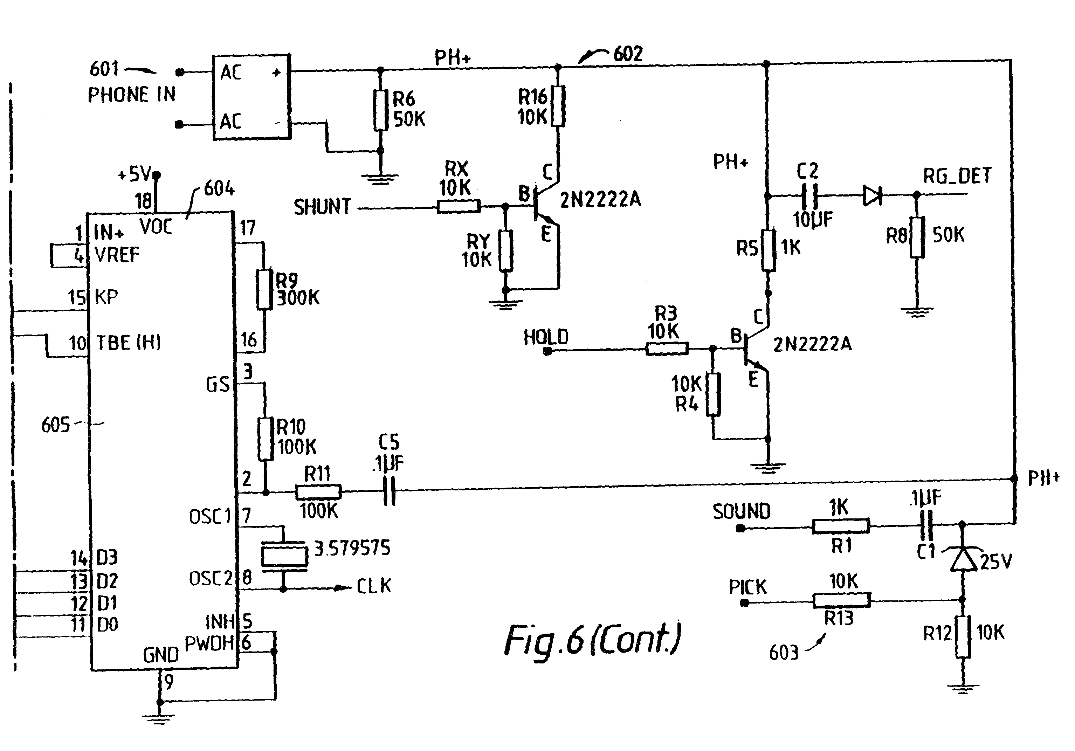

Figure 6 shows the telephone circuit for connecting a telephone receiver to the local communications line. The telephone circuit comprises a telephone line 601 from the telephone receiver (not shown in Figure 6) a ringing circuit 602, a pickup-hangup circuit 603, a tone decoder circuit 604, a central processing unit 605, a memory 606, and an interface circuit 607 for communicating with a local communications line.

The circuits illustrated in the drawings allow a maximum of eight loads in each module. However, it should be appreciated that in appropriate circumstances many more loads may be included within a single module.

### GENERAL DESCRIPTION OF SOFTWARE

A command entered at a particular input (keypad) is analyzed by the corresponding switching circuit. As a result of this analysis the command is either routed to the appropriate switch within the module, or alternatively is entered on the main communications line. In designing a system those inputs and outputs which are commonly used together, for example an input in a particular room and the output in the same room, should be grouped together within the same module, thereby minimizing the numbers of commands entered on the main communications line.

Where a command is entered on the main communications line, the switching circuit of each module analyzes the command to determine whether the command is intended for a load within that module and, if so, routes the command to the appropriate output. Because each switching circuit analyzes the command, there is no transmission delay.

Within each module, where two or more commands are entered from different inputs at almost the same time, the software determines a priority sequence for handling the commands so that they do not interfere with one another, and causes the later command to be stored temporarily and dealt with later.

To prevent two or more commands being entered on the main communications line at the same time, each switching circuit first checks the status of the main communications line before entering any command, and if the switching circuit determines that a command is already on the main communications line, then the software causes the later command to be temporarily stored and dealt with later. Commands are repeated with a waiting time of the order of 5 or 6 ms, more urgent commands having shorter waiting times whereby they will be entered onto the network first when the network becomes free.

When a command is entered on the main communications line, the software detects whether the command is in fact received at any of the modules. If the command is not received by any of the modules the software initially assumes that the command has been incorrectly transmitted due to noise or interference, and the command is re-transmitted. In the event of a second failure, the software then assumes that a fault exists, either in the command given or in the circuit. In response to this assumption the software causes the non-reception of the command to be recorded either at the location where the command was given so that the person giving the command appreciates that the command has not been obeyed, or at a central monitoring location to assist in diagnosing any fault in the circuit.

A command entered at a particular input (keypad) relating to loads within that module results in a corresponding signal to the appropriate LED within the keypad, and all other keypads in the same module.

An enquiry entered at a particular keypad concerning the status of loads in another module results in sending an enquiry signal on the main communication line to the other module, receiving the response, and signalling the response to the keypad at which the enquiry is entered.

### DESCRIPTION OF USER CHARTS AND FLOWCHARTS

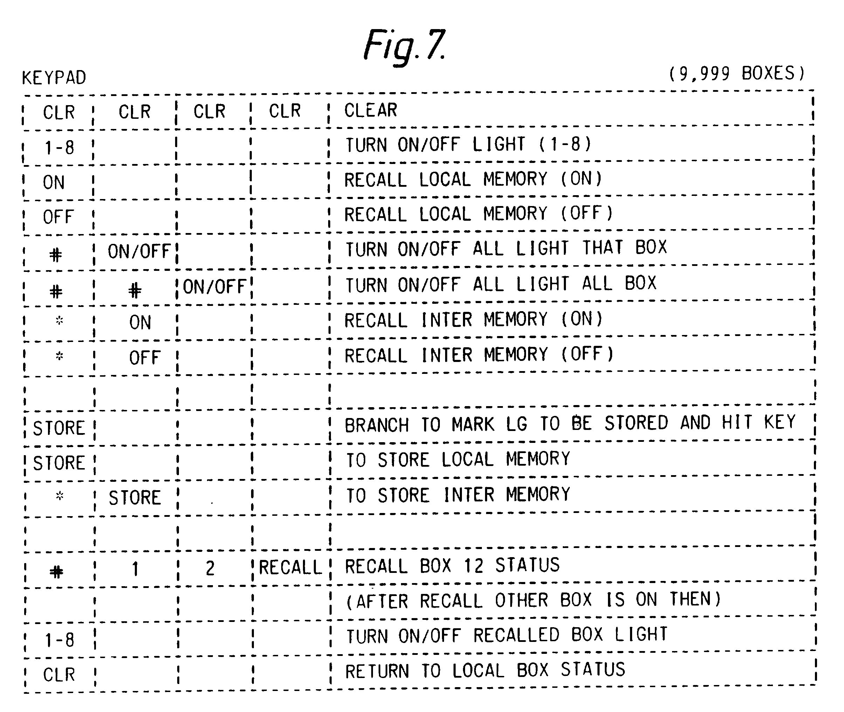

Figure 7 is a chart giving the user commands or enquiries on the keypad. The keypad itself is illustrated in Figure 4A and includes a total of 16 keys in a 4 x 4 array. In the user chart the four left hand columns represent the command or enquiry which is made by pressing between one and four keys. The fifth column is a brief description of the command.

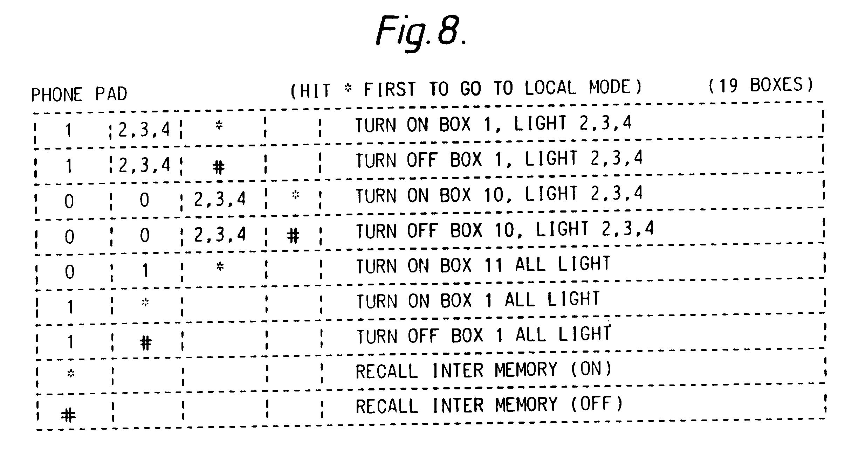

Figure 8 is a chart giving the user commands or enquiries by telephone keypad. A conventional telephone has only twelve keys instead of the sixteen in the keypad shown in Figure 4A, and accordingly a different protocol must be used. According to a further feature of the invention a telephone is provided which has a keypad having the same keys and LED's as the keypad of the invention. A home owner may install such a telephone in his workplace and control loads in his home from his workplace.

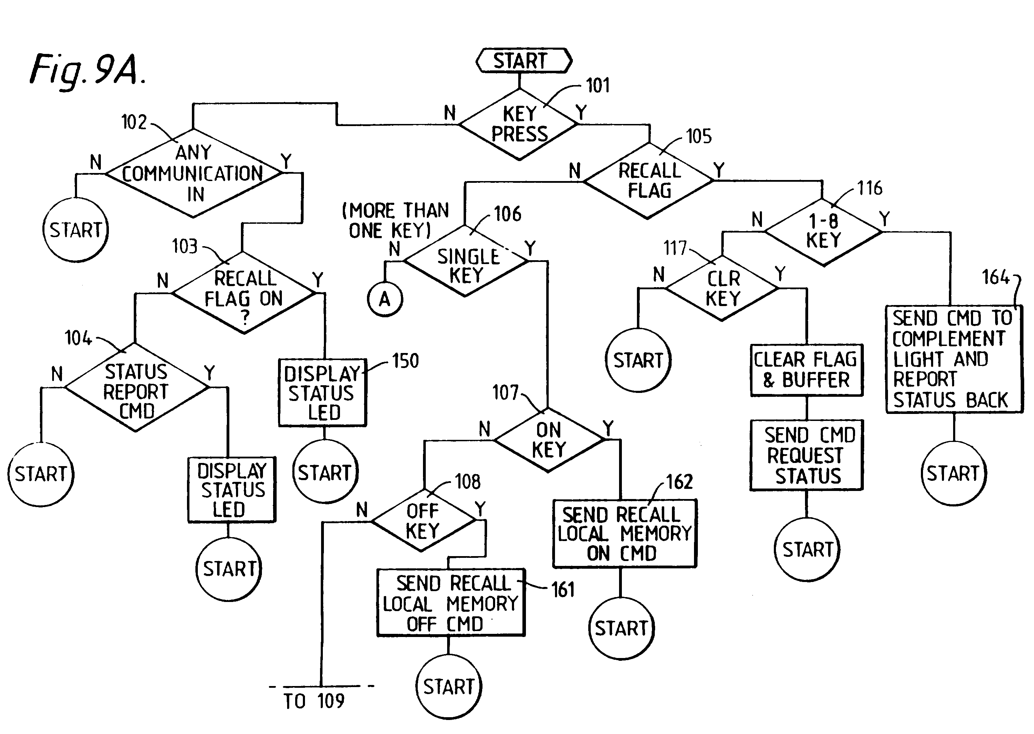

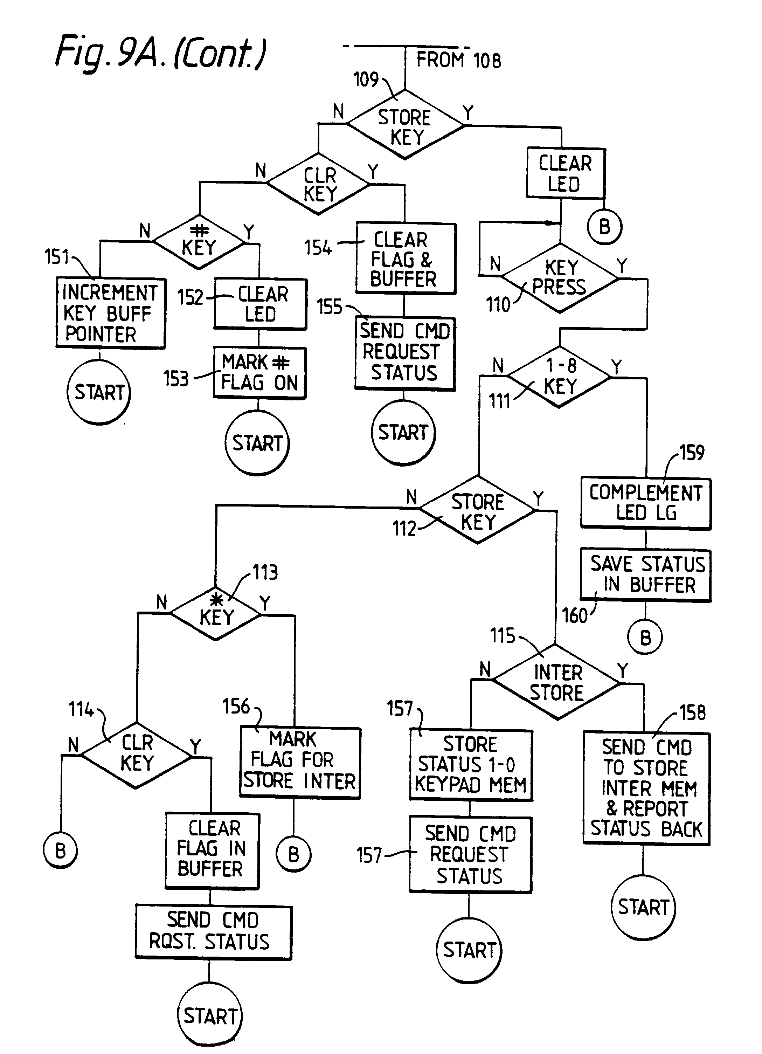

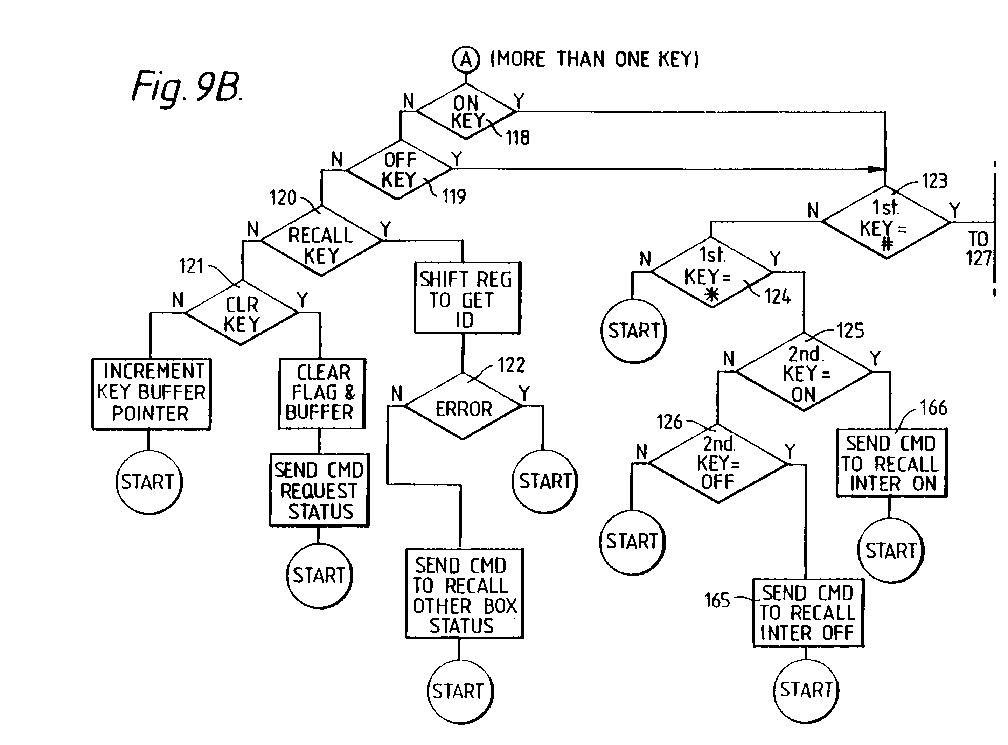

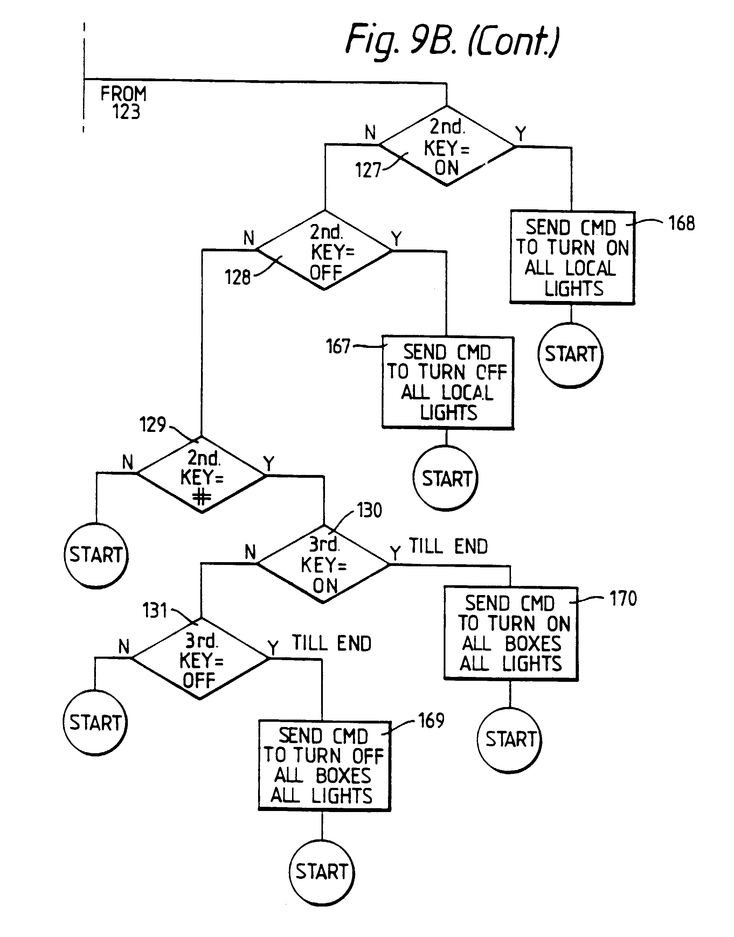

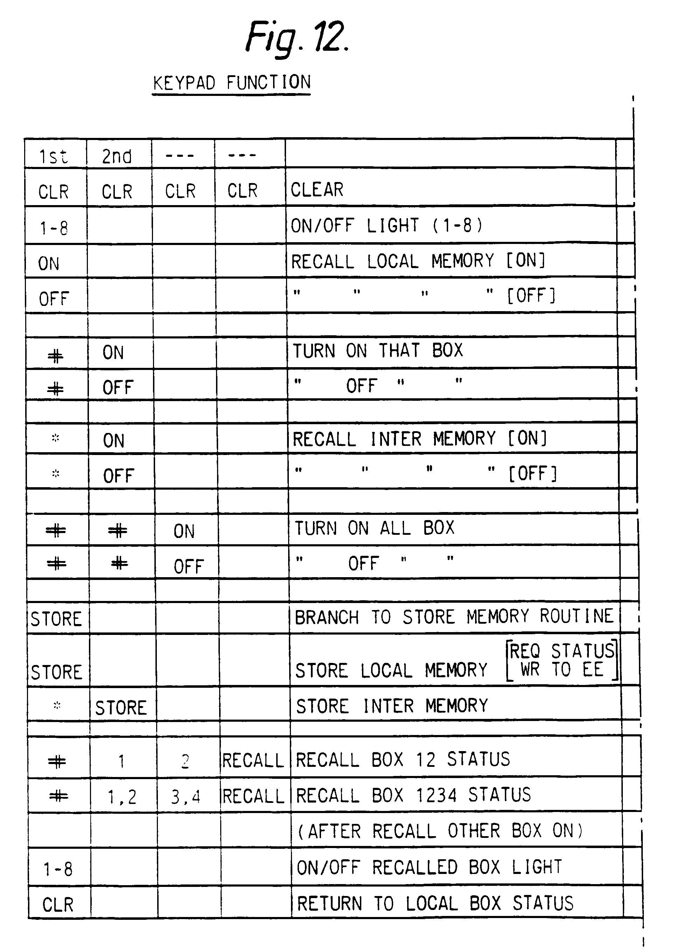

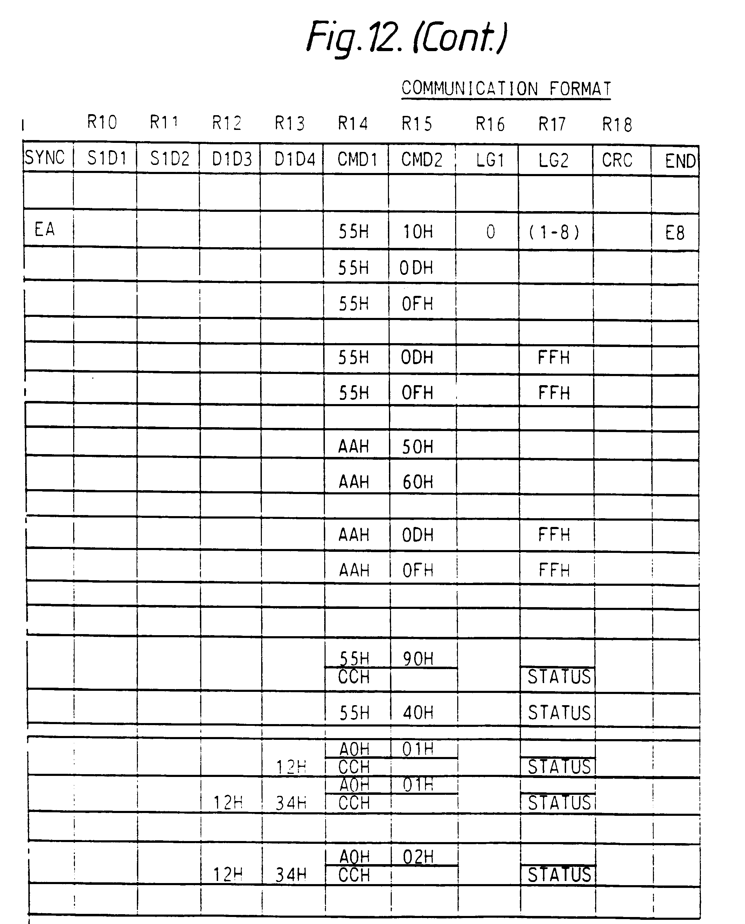

Figures 9A and 9B together form a flowchart illustrating the operation of the keypad microprocessor. The keypad microprocessor responds to two types of signal, firstly "outgoing" signals consisting of commands or enquiries entered on the keypad which must then be distributed to other parts of the system, and secondly "incoming" signals consisting of commands from other parts of the system to switch on LED's at the keypad. For a better understanding of the outgoing signals the flowchart of Figures 9A and 9B should be read in conjunction with the keypad user chart illustrated in Figure 7 and the protocol chart Figure 12. The decision making process includes questions (diamond shaped boxes) resulting in either a positive answer indicated by "Y" (for "yes") or a negative answer indicated by "N" (or "no").

The questions are listed below in tabular form:

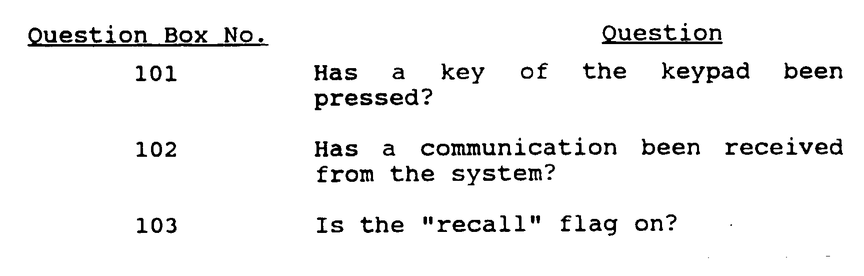

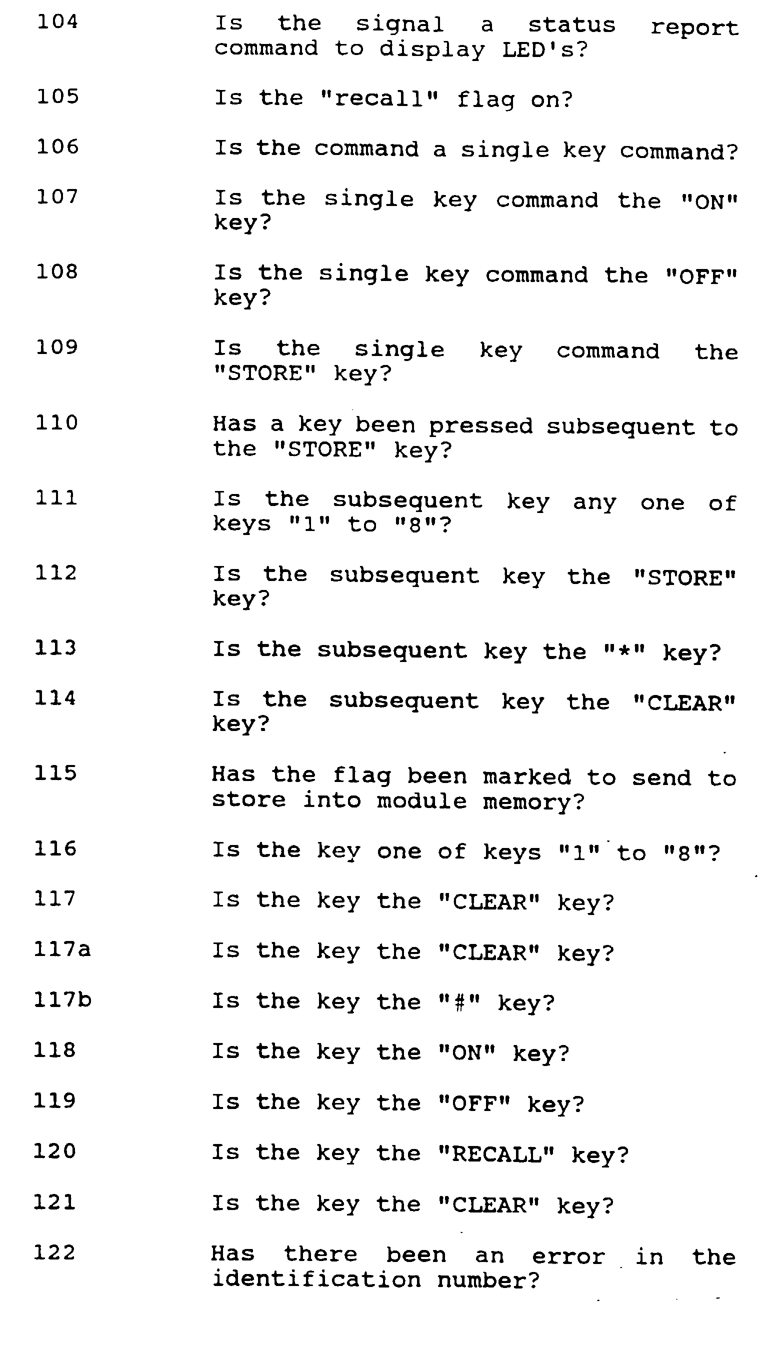

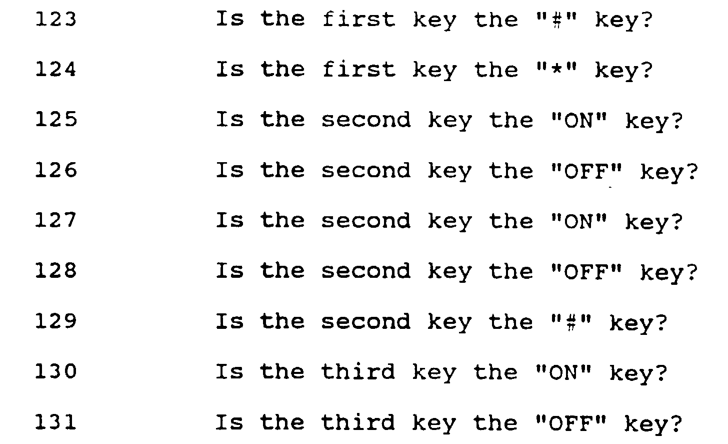

The answer to each question leads either to another question or back to a previous question or to the start or leads to a command being issued by the keypad microprocessor, these commands including the following:

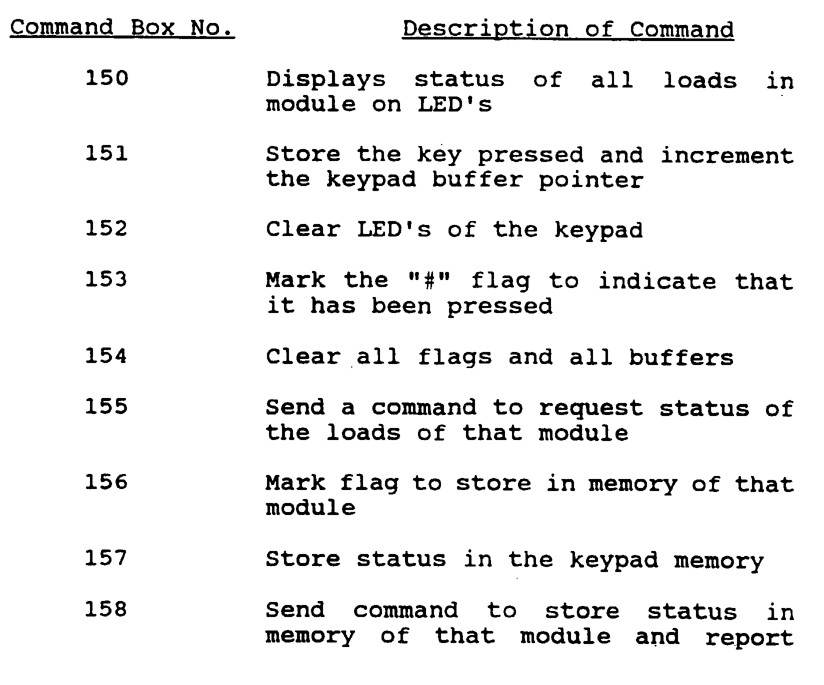

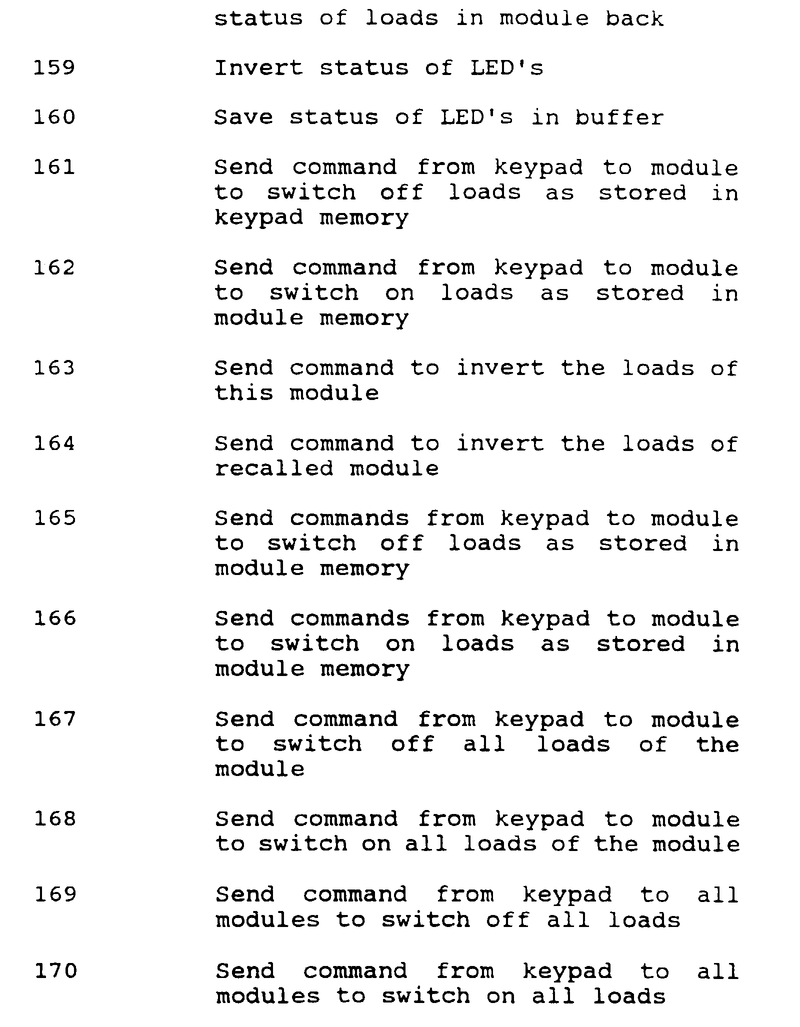

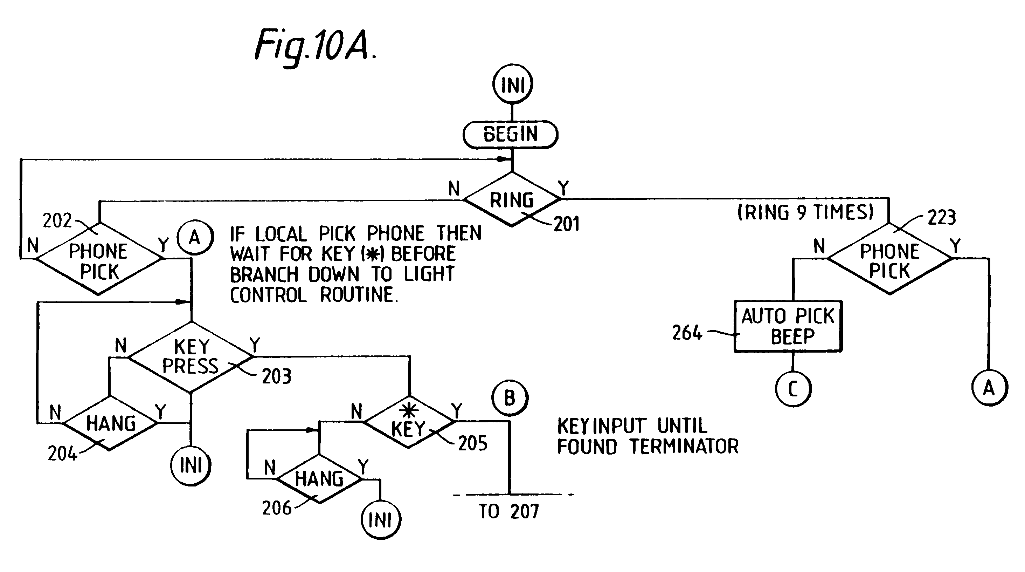

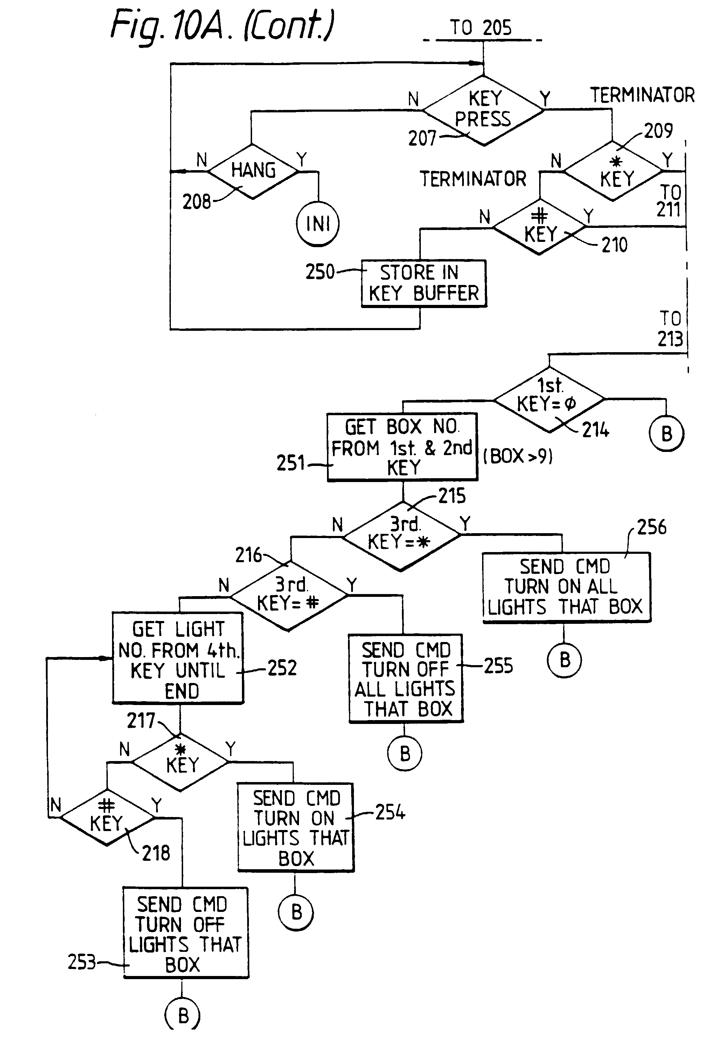

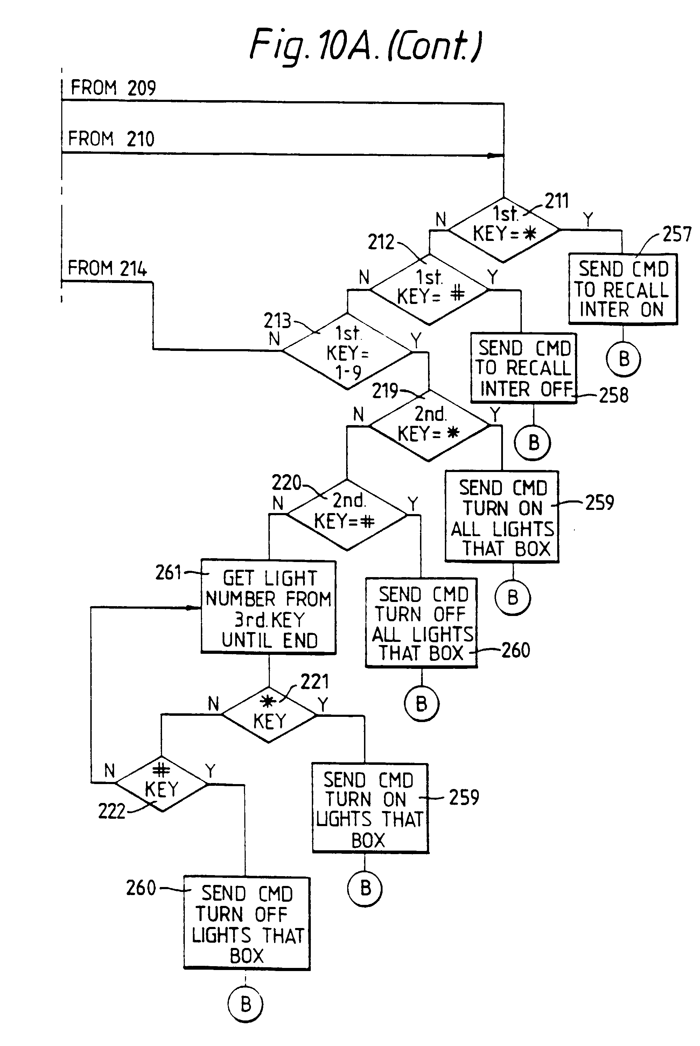

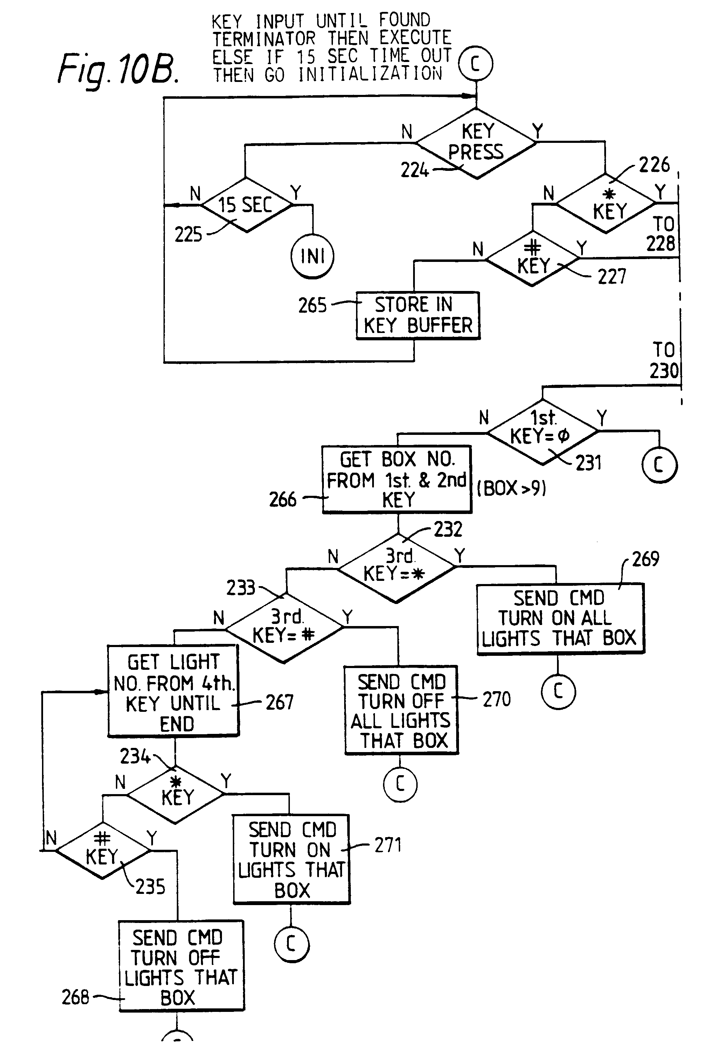

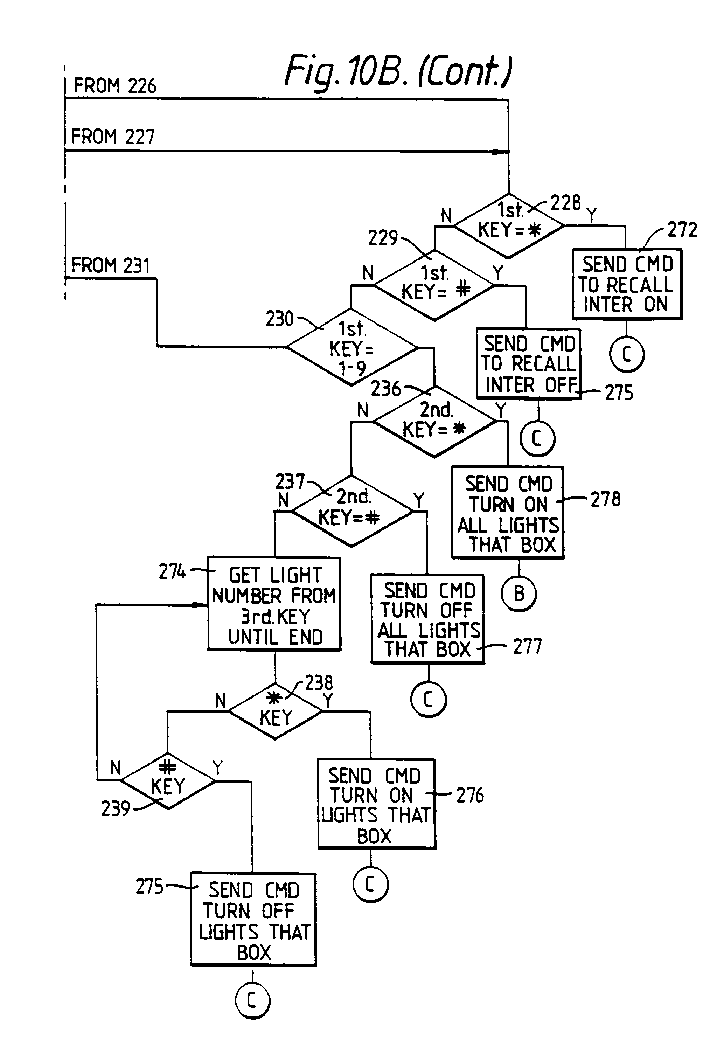

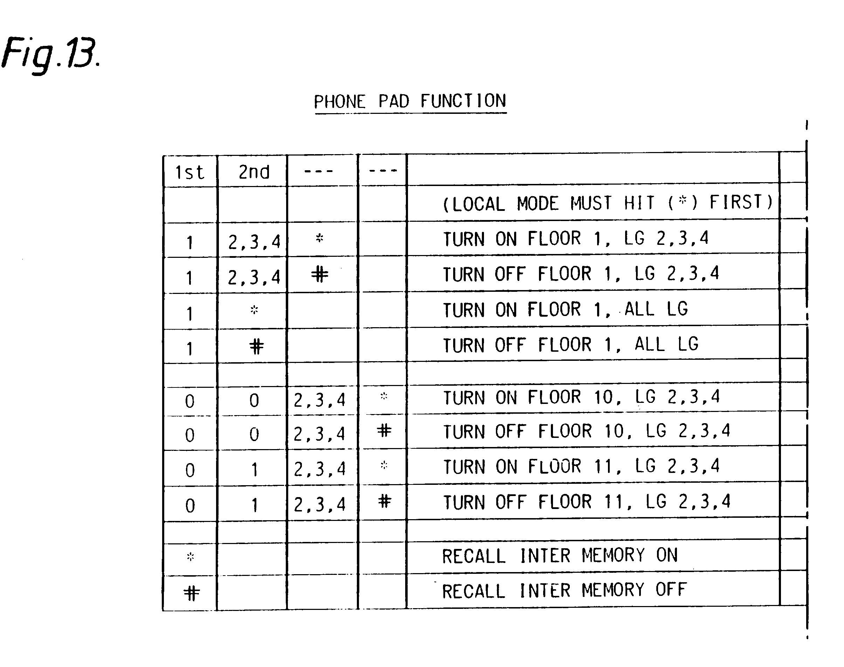

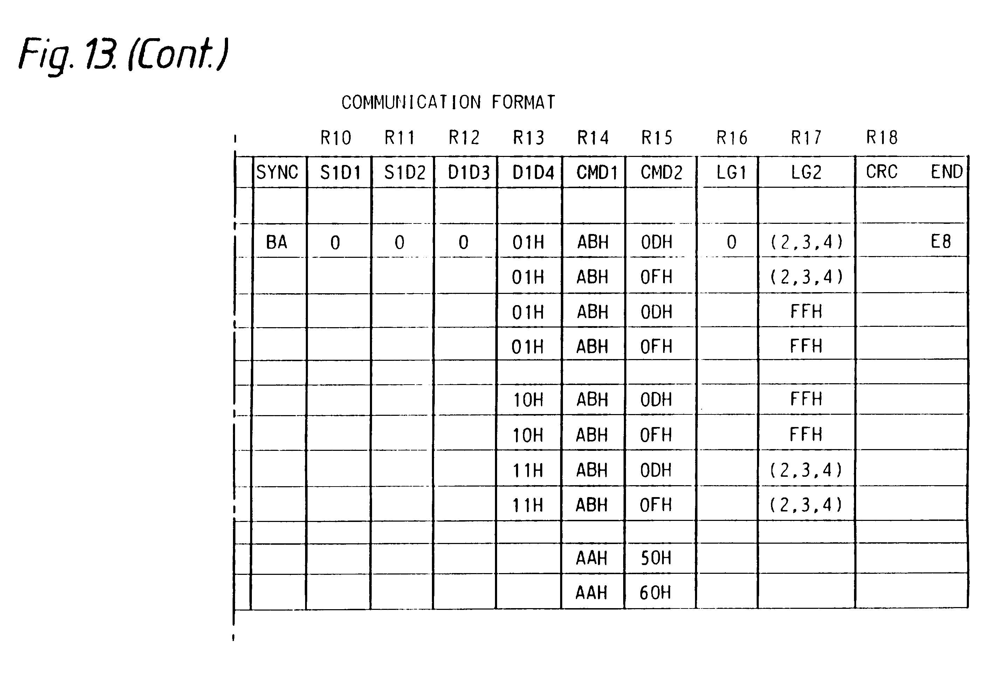

Figures 10A and 10B together form a flowchart illustrating the operation of the telephone microprocessor. The telephone microprocessor distributes "outgoing" signals in the same way as for the keypad, but differs from the keypad in a number of respects. Firstly because the telephone does not have LED's and therefore does not receive incoming signals, secondly because the telephone may also be used in a normal telephone mode for purposes other than to control the system, and thirdly because the telephone has a lesser number of keys than the keypad. For a better understanding of the outgoing signals from the telephone to the system according to the invention the flowchart of Figures 10A and 10B should be read in conjunction with the telephone user chart illustrated in Figure 8 and protocol chart Figure 13. The decision making process includes questions (diamond shaped boxes) resulting in either a positive answer indicated by "Y" (for "yes") or a negative answer indicated by "N" (or "no"). The questions are listed below in tabular form:

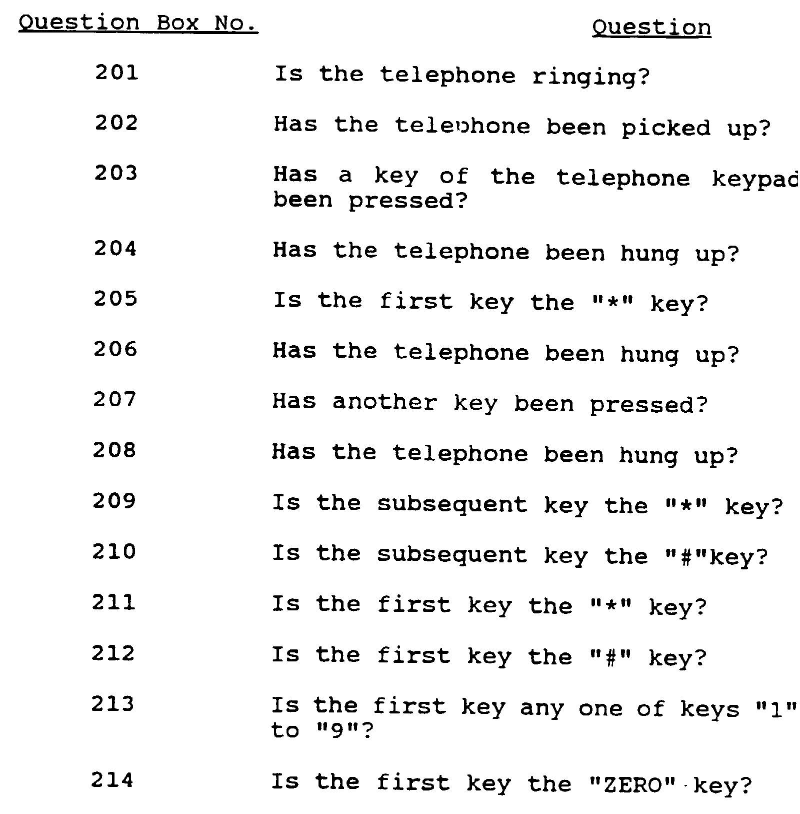

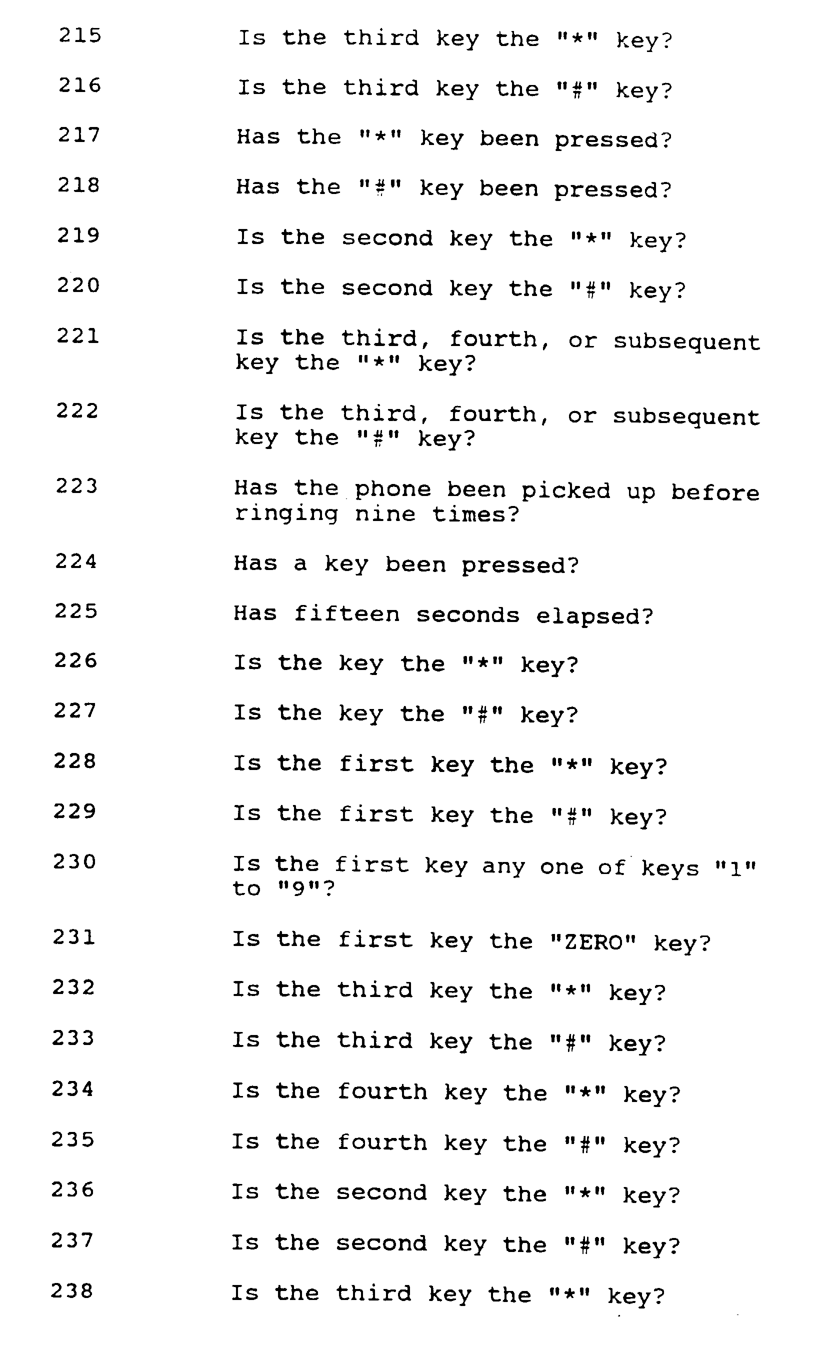

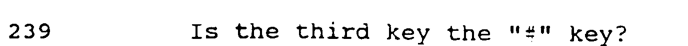

The answers to these questions lead either back to the beginning, or lead to another question, or lead to the microprocessor issuing a command, as listed in the following table:

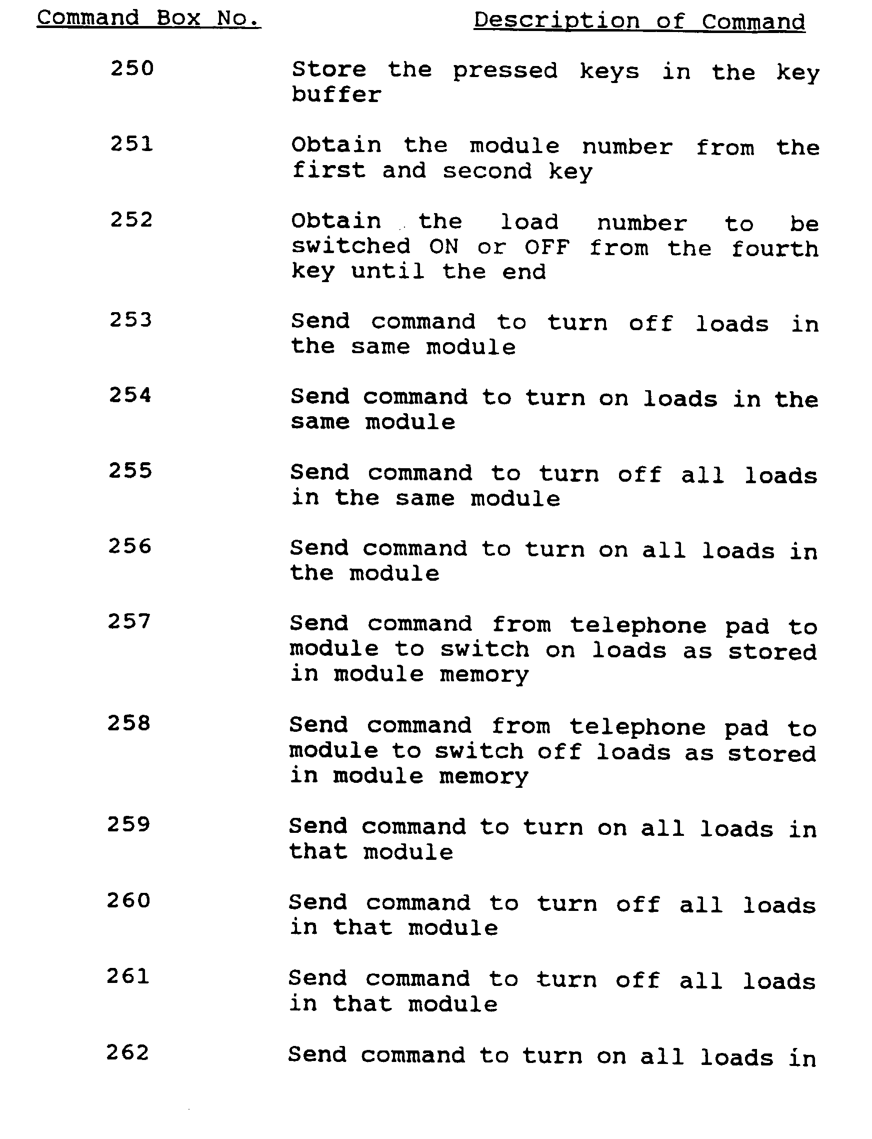

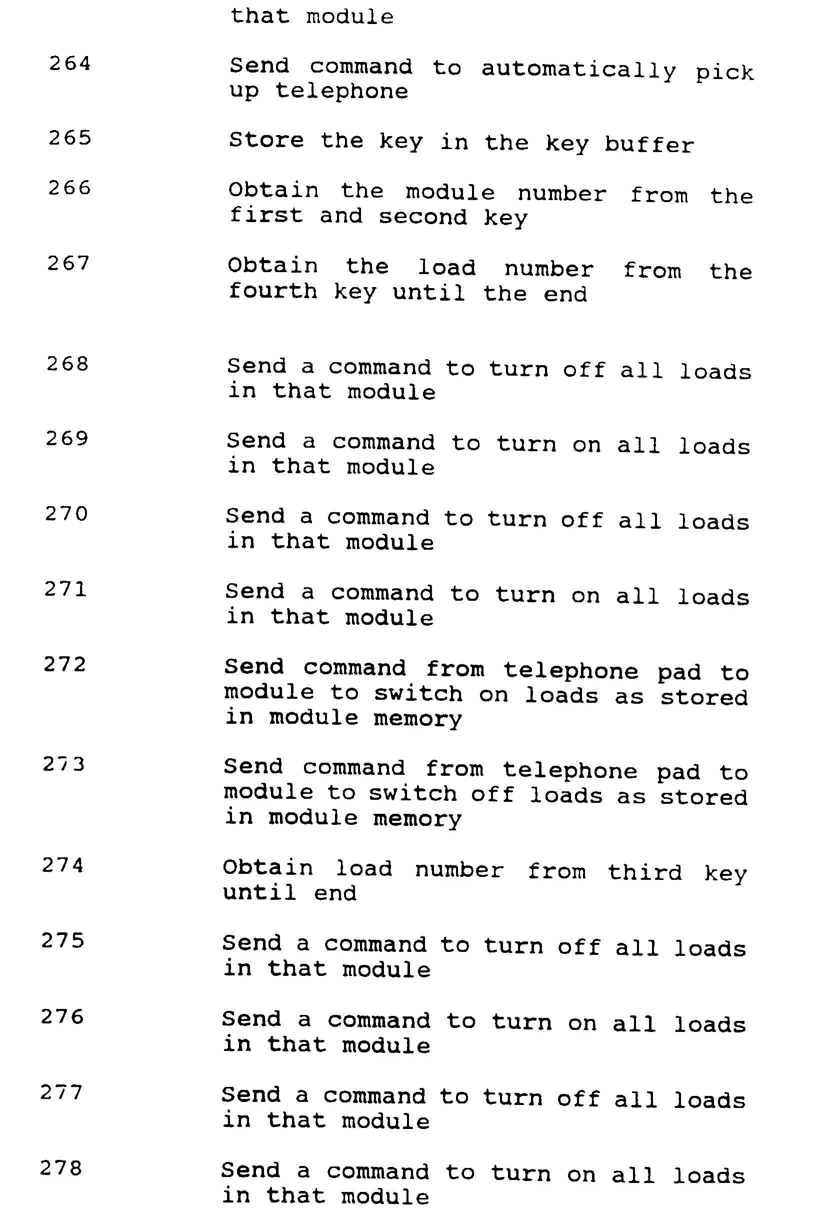

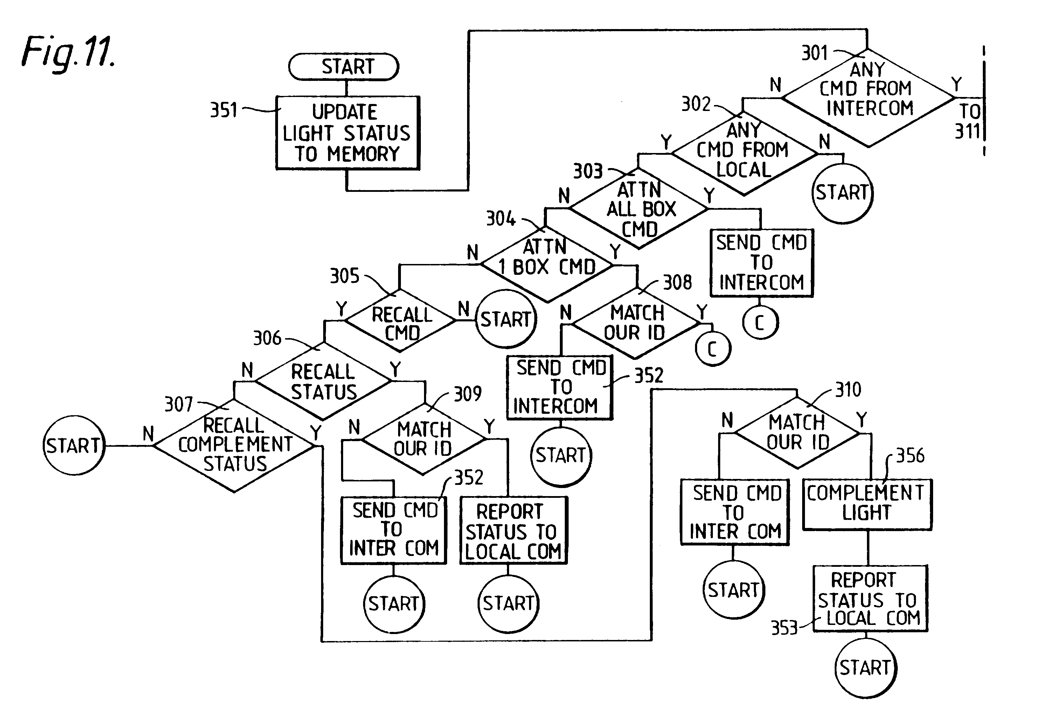

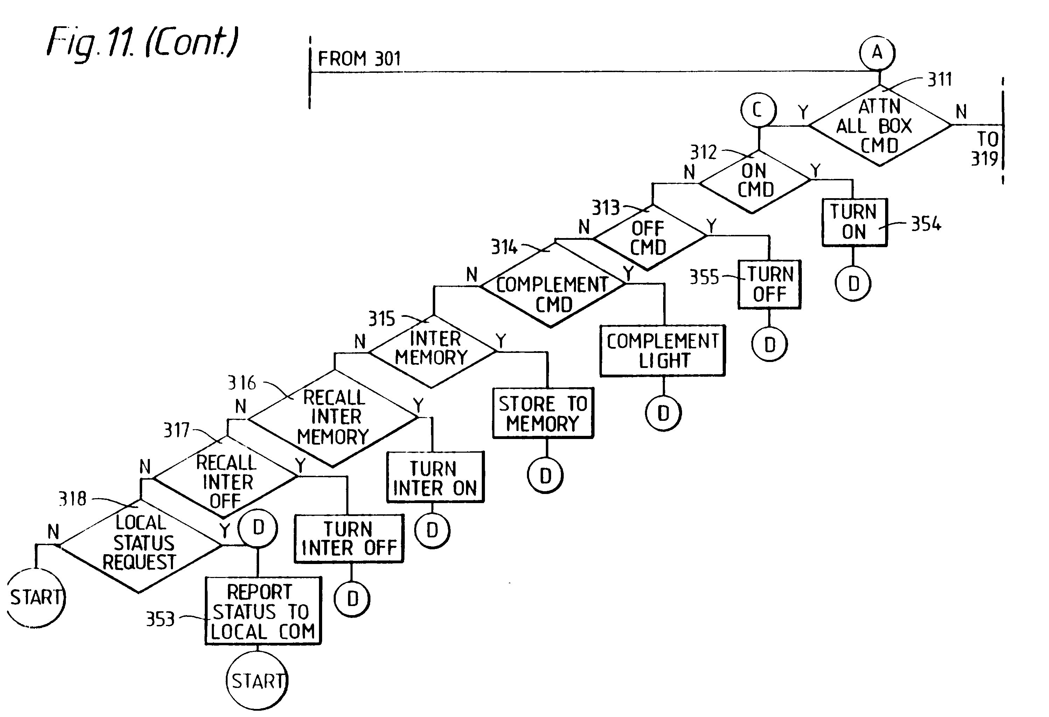

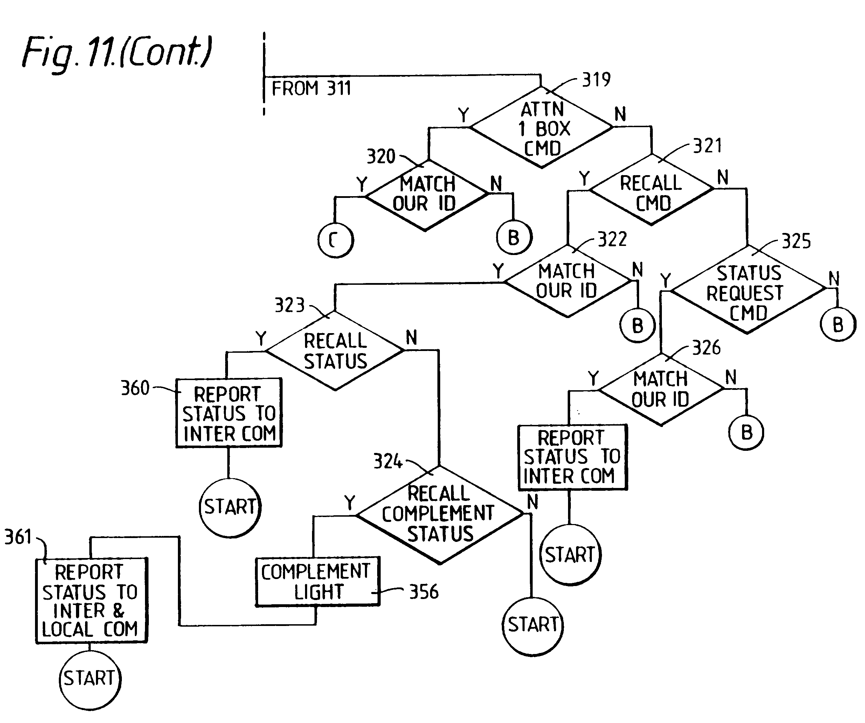

Figure 11 is a flowchart of the operation- of the microprocessor in each module. This microprocessor receives signals from outside the module and from within the module, and issues commands to other modules and within the module. The decision making process includes questions (diamond shaped boxes) resulting in either a positive answer indicated by "Y" (for "yes") or negative answer indicated by "N" or "no". The questions are listed below in tabular form:

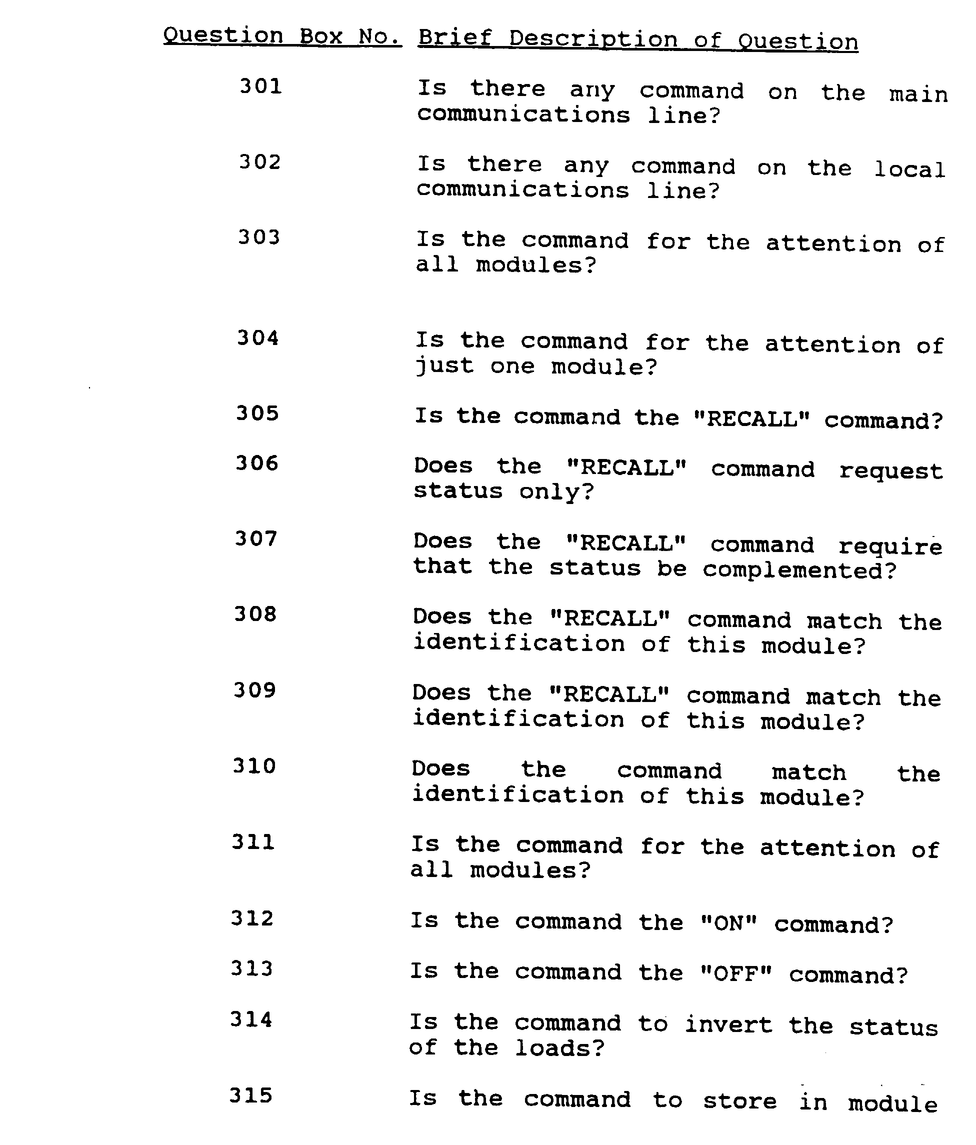

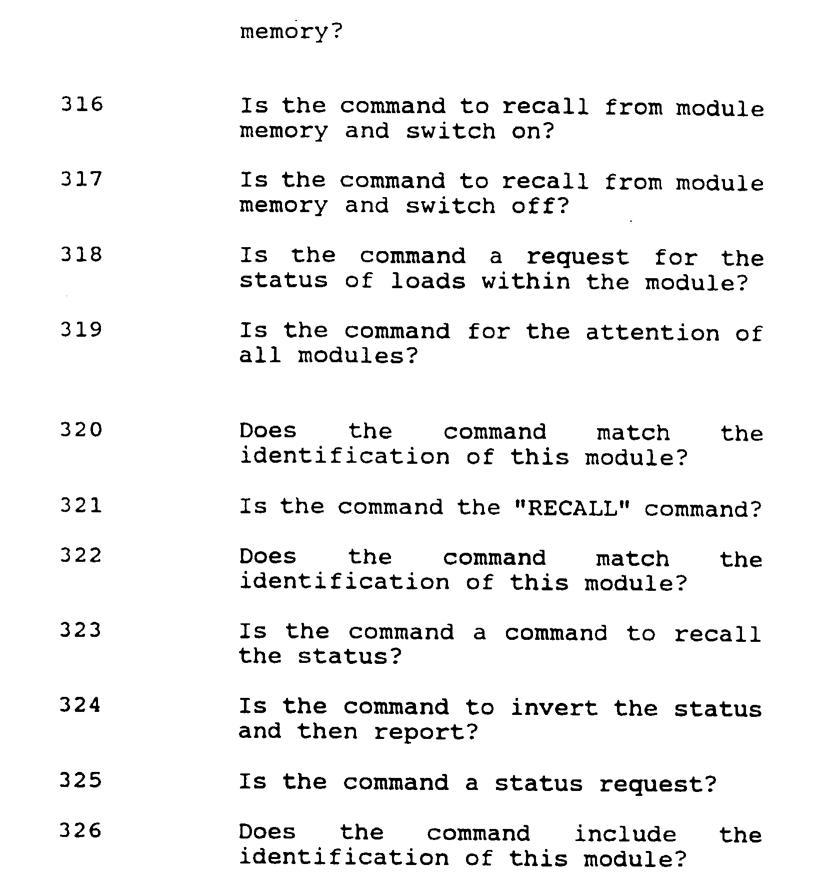

The answers to the questions may lead to the microprocessor going back to the start of its analysis, or may lead to a further question, or may lead to a different part of the flowchart, or may lead to the microprocessor issuing a command. The possible commands are listed in tabular form below.

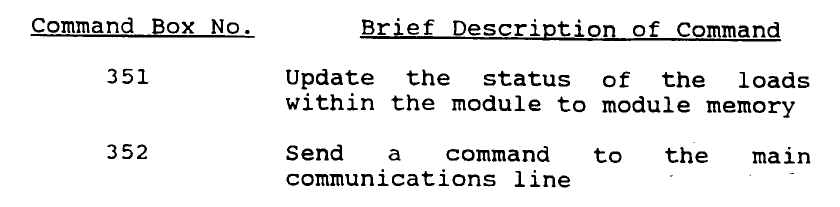

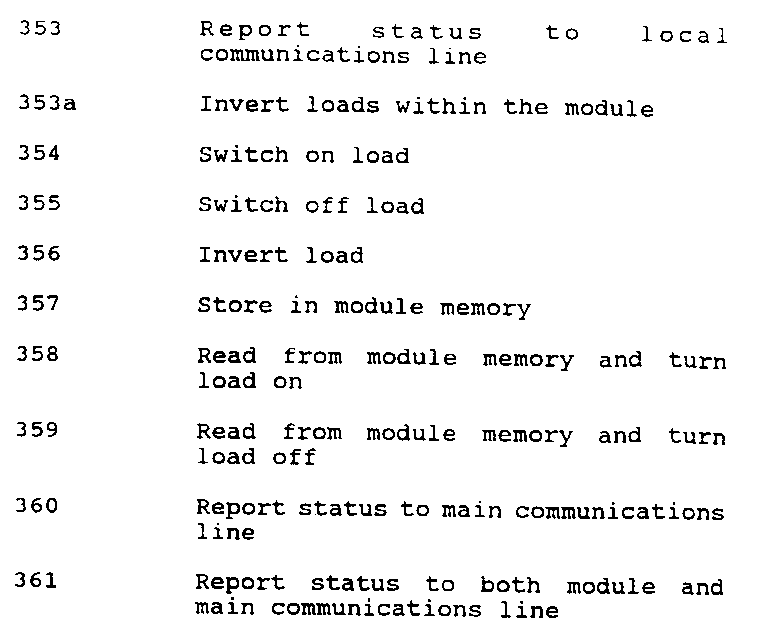

### ASYNCHRONOUS COMMUNICATION

In use, systems according to the invention typically receive commands and enquiries in much lower volume than the volume at which commands and enquiries are received by many computer systems. In addition many commands and enquiries are kept within a particular module. As a result it is possible to use a low speed networking technique in which data is transmitted asynchronously at a speed ranging from 50 baud to 56 kilobaud using communications lines meeting international standard RS 422. Asynchronous communication is much less expensive than synchronous communication.

Figure 12 is a chart similar to Figure 7 but also showing the communications protocol for data entered through the keypad. Figure 13 is a chart similar to Figure 8 but also showing the communications protocol for data entered through the network lines.

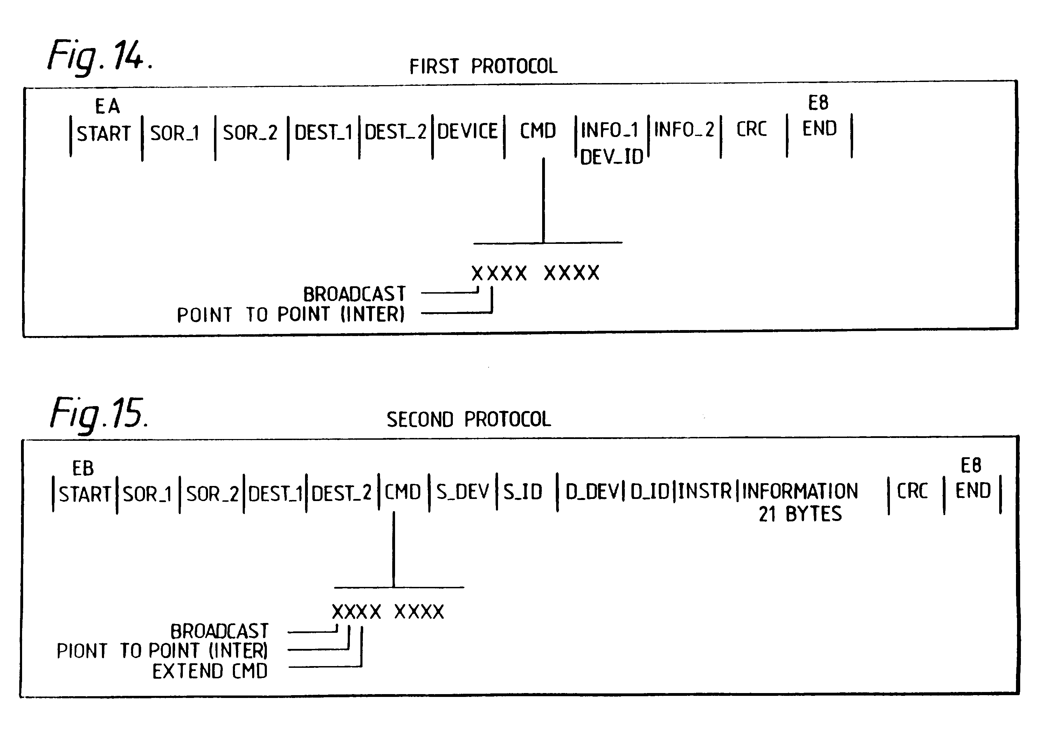

A first protocol format is illustrated in Figure 14 and consists of eleven bytes of data, the first byte being a start byte, the second and third bytes identifying the source of the command or enquiry, the fourth and fifth bytes identifying the destination of the command or enquiry, the sixth and seventh bytes being the command or- enquiry instruction, the eighth and ninth bytes containing data information, the tenth byte being a cyclic redundancy check (CRC) byte, and the eleventh byte being the end byte.

Figure 15 illustrates a second data protocol. This is similar to the first, but longer including 21 bytes of information alone.

Before transmitting data a request for attention is made so that all parties connected to the network are alerted concerning the transmission of data. A simple logic low with a given time constitutes the request. A stable logic high for a minimum of 10 milliseconds indicates that the network is not occupied, and then a stable logic low for the given time indicates that data is about to be transmitted.

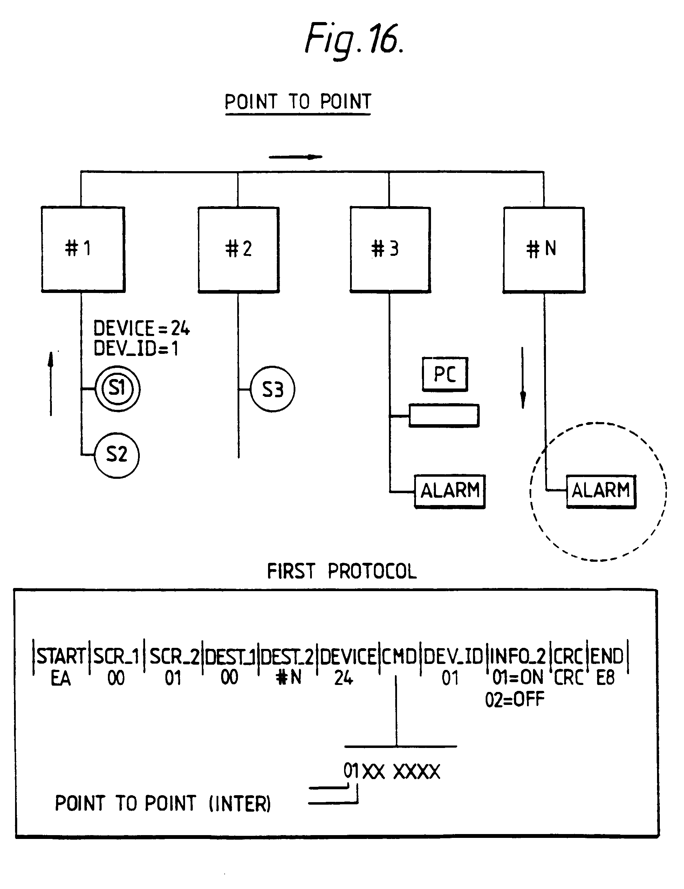

The first protocol, being shorter, can be transmitted quickly and is used for transmitting urgent data; for example a warning signal from a smoke detector or the like, or security information. The second protocol is used in normal circumstances when more information is required and speed is not so important. As an example, Figure 16 illustrates how the first protocol may be used to transmit data from a sensor S1 in one module, to an alarm in a different module via the main communications network.

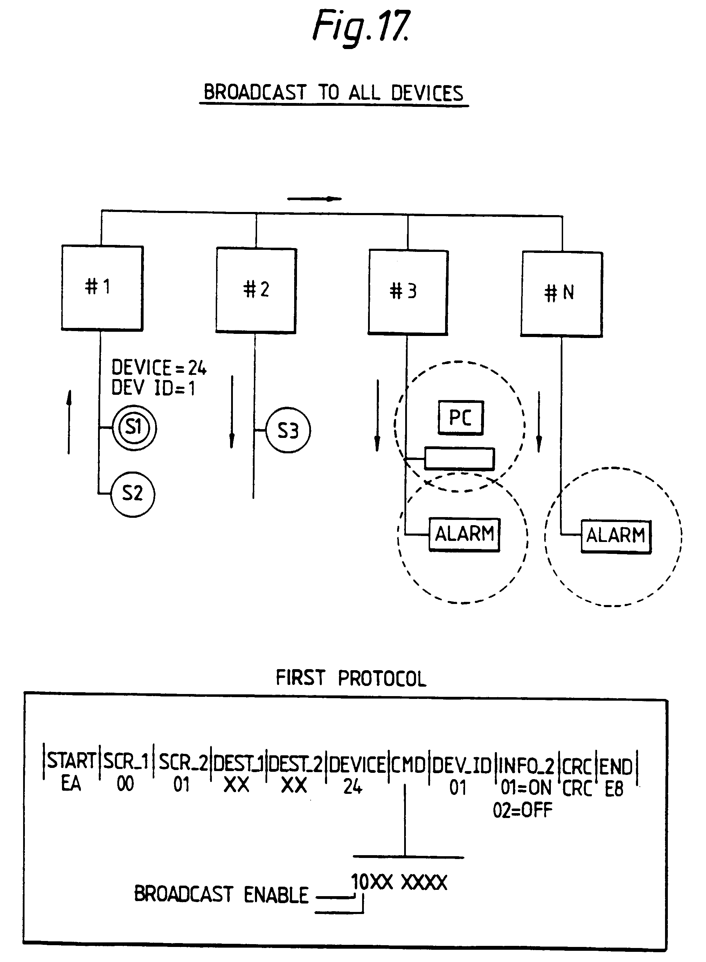

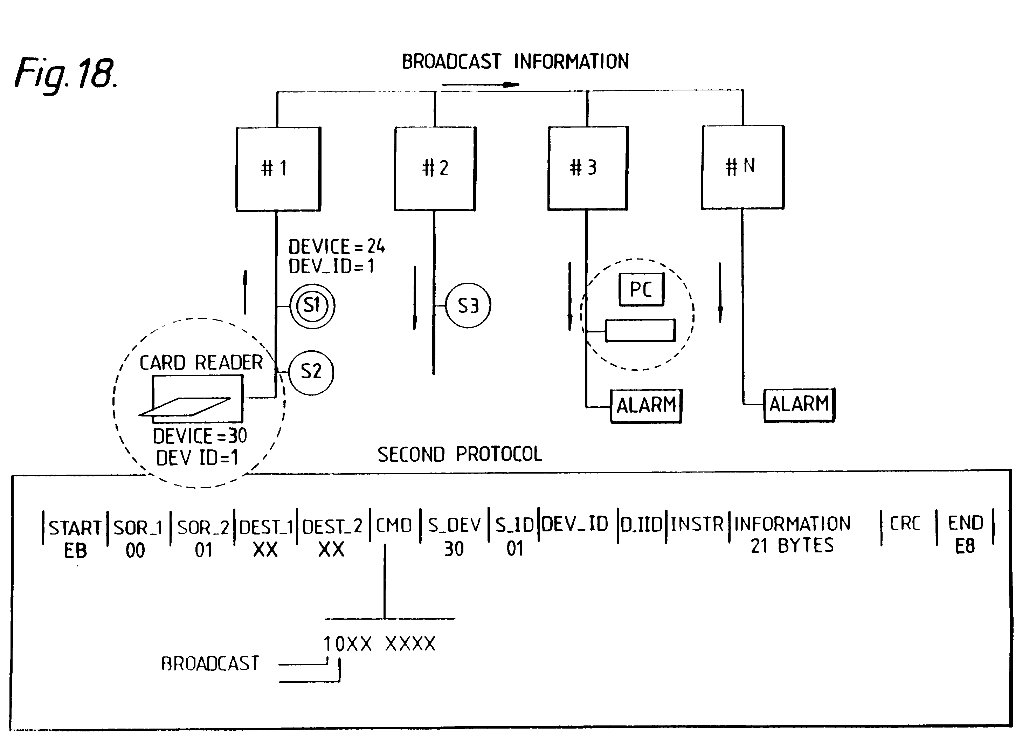

Signals can be transmitted on a point-to-point basis, or may be transmitted more widely. Figure 17 illustrates a sensor S1 transmitting data to two alarms and a PC. Such information is simple and can be transmitted using the first protocol. More complex information can be sent using the second protocol. An example is illustrated in Figure 18 in which information from a card-reader, for example controlling an electronic lock, is transmitted to a controlling PC in a different module.

It should be understood that while the description has primarily centered on the control and operation of simple devices such as lights, the invention is not limited thereto. It will be appreciated that the apparatus could be used to control many other types of devices including, but of course not limited to, sensors such as smoke detectors or motion detectors, electronic security locks, video cameras, heating systems or air conditioning units. In effect all aspects of a building, or even group of buildings, can be controlled using the present apparatus.

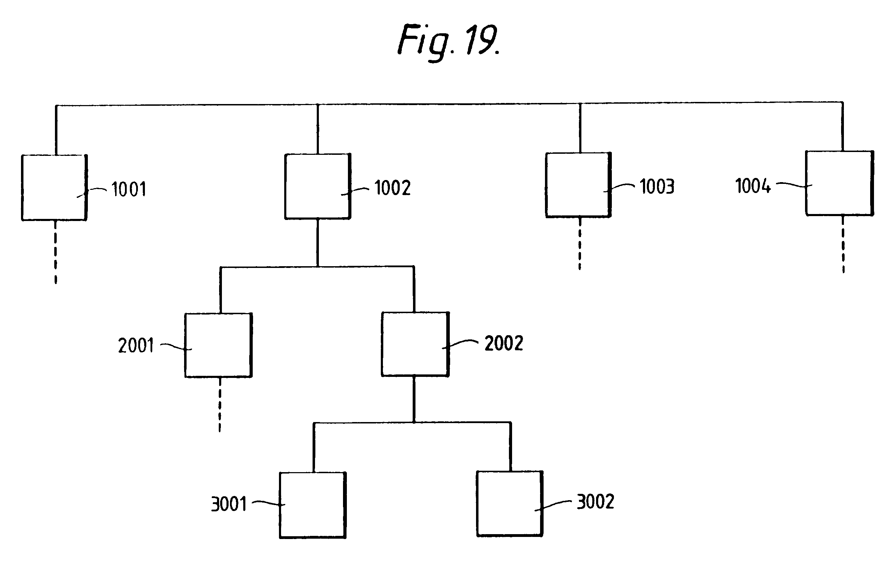

The examples illustrated previously show a single level of modules connected to the main transmission line. It should be understood, however, that each module can include sub-modules, and a branched tree-like architecture can be employed. The configuration in any practical situation will depend on the requirements of a particular application. As a general rule, however, control units which are more frequently called upon to converse with one another are grouped together. Figure 19 illustrates just one possible example. The four main modules 1001, 1002, 1003 and 1004, may represent four different buildings; the next level of modules 2001, 2002 ... may correspond to the individual floors within each buildings and these modules in turn may comprise further sub-modules 3001, 3002 ... for individual rooms.

## Claims

1. Apparatus for controlling a number of electrical loads (21,22,23,39,40,41,59,60,61,76,77,78,83,84,85) comprising an electrical switch (11,12,13,36,37,38,56,57,58) for each load, a network of telecommunication lines including a connection to each electrical switch, command input stations (2, 3, 30,50,70,71,80) connected to the telecommunication network, and control means whereby a command entered at one of said input stations travels along the network and operates a switch thereby switching on or off a load, wherein said network comprises a plurality of network modules (a,b,c,d,e) connected to each other by a main telecommunication line (1), each module comprising a said input station and one or more of said switches, characterised in that in the case of commands from an input station to one of said switches within the same module said control means is adapted to send these commands from the input station to that switch without entering the command on the main communication line and wherein in the case of commands from an input station to one of said switches within a different module, said control means is adapted to enter the command onto the main communication line.

2. Apparatus according to claim 1 wherein at least some of said modules (a,b,c,d,e) comprise one or more sub-modules, each said sub-module comprising an input station, one or more switches and control means, whereby said network is formed with a branched structure.

3. Apparatus according to claim 1 or 2 in which communications are transmitted asynchronously.

4. Apparatus according to claim 3 wherein messages are transmitted on said network in either a first protocol or a second protocol, said first protocol being shorter than said second and being used for messages of greater urgency.

5. Apparatus according to claim 4 in which the asynchronous transmission takes place at speeds in the range of 50 baud to 56 kilobaud in the form of a logic inversion to command attention followed by an eleven byte first protocol transmission comprising a starting byte, two source identification bytes, two destination identification bytes, two command or enquiry bytes, two data information bytes, a cyclic redundancy check byte, and an end byte.

6. Apparatus according to claim 4 in which the asynchronous transmission takes place at speeds in the range of 50 baud to 56 kilobaud in the form of a logic inversion to command attention followed by a thirty-four byte second protocol transmission comprising twenty-one command information bytes.

7. Apparatus according to any preceding claim including an electrical switch status indicator means for indicating the status of the electrical switches connected to the network.

8. Apparatus according to any preceding claim comprising means for connection to an external communication line so as to enable the apparatus to receive commands from the external communication line and enter these commands on to the network.

9. Apparatus according to claim 8 wherein said external communications line comprises a directly wired-in telephone line, a remote telephone, or a computer link.

10. Apparatus according to any preceding claim wherein each input station comprises a keypad (90) consisting of keys for entering commands on the network and a light (401) associated with each key of the keypad for indicating the status of the electrical switches within the same module as said input station.

11. Apparatus according to any preceding claim in which each command input station is independently programmable to store complex commands which may be recalled upon receipt of a relatively simple command either directly at said command input station or by means of a command received from the network.

12. The apparatus according to any preceding claim wherein one of said input stations comprises a telephone (91) having a keypad consisting of keys for entering commands on the network and a light (401) associated with each key of the keypad for indicating the status of electrical switches of the apparatus.

## Patentansprüche

1. Gerät zur Steuerung einer Anzahl von elektrischen Lasten (21,22,23,39,40,41,59,60,61,76,77,78,83,84,85), das einen elektrischen Schalter (11,12,13,36,37,38,56,57,58) für jede Last umfasst, ein Netz von Fernmeldeleitungen, die einen Anschluß an jeden elektrischen Schalter einschließen, Befehleingabestationen (2,3,30,50,70,71,80), die an das Fernmeldenetz angeschlossen sind, und ein Steuermittel, wodurch ein Befehl, der an einer der Eingabestationen eingegeben ist, das Netz entlanggeht und einen Schalter betreibt, dabei eine Last ein- oder ausschaltet, worin das Netz eine Vielzahl von Netzbaugruppen (a,b,c,d,e) umfasst, die durch eine Hauptfernmeldeleitung (1) aneinder angeschlossen sind, wobei jede Baugruppe eine Eingabestation und einen oder mehrere der Schalter umfasst, dadurch gekennzeichnet, daß das Steuermittel in dem Fall von Befehlen von einer Eingabestation an einen der Schalter in derselben Baugruppe diese Befehle von der Eingabestation zu dem Schalter senden kann, ohne den Befehl in die Hauptkommunikationsleitung einzugeben, und worin das Steuermittel in dem Fall von Befehlen von einer Eingabestation an einen der Schalter in einer verschiedenen Baugruppe den Befehl in die Hauptkommunikationsleitung eingeben kann.

2. Gerät nach Anspruch 1, in dem wenigstens einige der Baugruppen (a,b,c,d,e) eine oder mehrere Unterbaugruppen umfassen, wobei jede Unterbaugruppe eine Eingabestation umfasst, einen oder mehrere Schalter und Steuermittel, wobei das Netz mit einer verzweigten Struktur gebildet ist.

3. Gerät nach Anspruch 1 oder 2, in dem Kommunikationen asynchron gesendet werden.

4. Gerät nach Anspruch 3, in dem Mitteilungen in dem Netz in entweder einem ersten Protokoll oder einem zweiten Protokoll gesendet werden, wobei das erste Protokoll kürzer als das zweite ist, und für Mitteilungen größerer Dringlichkeit benutzt wird.

5. Gerät nach Anspruch 4, in dem die asynchrone Sendung mit Geschwindigkeiten in dem Bereich von 50 Baud bis 56 Kilobaud in der Gestalt einer logischen Inversion stattfindet, um Abruf zu befehlen, gefolgt von einer ersten Protokollsendung mit elf Bytes, die ein Anfangsbyte umfasst, zwei Quellenidentifizierungsbytes, zwei Zielidentifizierungsbytes, zwei Befehl- oder Anfragebytes, zwei Dateninformationsbytes, ein zyklisches Blocksicherungsbyte, und ein Endbyte.

6. Gerät nach Anspruch 4, in dem die ansynchrone Sendung mit Geschwindigkeiten in dem Bereich von 50 Baud bis 56 Kilobaud in der Gestalt einer logischen Inversion stattfindet, um Abruf zu befehlen, gefolgt von einer zweiten Protokollsendung mit vierundddreißig Bytes, die einundzwanzig Befehlinformationsbytes umfasst.

7. Gerät nach einem der vorhergehenden Ansprüche, das ein elektrisches Schalterzustandsanzeigemittel umfasst, um den Zustand der elektrischen Schalter anzuzeigen, die an das Netz angeschlossen sind.

8. Gerät nach einem der vorhergehenden Ansprüche, das ein Mittel zum Anschluß an eine äußere Kommunikationsleitung umfasst, um dem Gerät zu ermöglichen, Befehle von der äußeren Kommunikationsleitung zu empfangen, und diese Befehle in das Netz einzugeben.

9. Gerät nach Anspruch 8, in dem die äußere Kommunikationsleitung eine direkt festverdrahtete Telefonleitung, ein entferntes Telefon, oder eine Computerverbindung umfasst.

10. Gerät nach einem der vorhergehenden Ansprüche, in dem jede Eingabestation eine Tastatur (90) umfasst, die aus Tasten besteht, um Befehle in das Netz einzugeben, und ein Licht (401), das jeder Taste der Tastatur zugeordnet ist, um den Zustand der elektrischen Schalter in derselben Baugruppe wie die Eingabestation anzuzeigen.

11. Gerät nach einem der vorhergehenden Ansprüche, in dem jede Befehleingabestation unabhängig programmiert werden kann, um komplexe Befehle zu speichern, die nach Empfang eines relativ einfachen Befehls entweder direkt an der Befehleingabestation oder durch ein Mittel eines von dem Netz empfangenen Befehls abgerufen werden können.

12. Gerät nach einem der vorhergehenden Ansprüche, in dem eine der Eingabestationen ein Telefon (91) mit einer Tastatur umfasst, die aus Tasten besteht, um Befehle in das Netz einzugeben, und ein Licht (401), das jeder Taste der Tastatur zugeordnet ist, um den Zustand von elektrischen Schaltern des Geräts anzuzeigen.

## Revendications

1. Appareil de contrôle de plusieurs charges électriques (21,22,23,39,40,41,59,60,61,76,77,78,83,84,85) comportant un rupteur électrique (11,12,13,36,37,38,56,57,58), un réseau de lignes de télécommunication prévoyant un raccord à chaque rupteur électrique, des postes de commande d'entrée (2,3,30,50,70,71,80) raccordés au réseau de télécommunication et des moyens de commande par l'intermédiaire desquels une commande entrée à l'un desdits postes se déplace le long du réseau et fait fonctionner un rupteur en excitation ou désexcitation de charge, ledit réseau comportant une pluralité de modules de réseau (a,b,c,d,e) raccordés l'un à l'autre par une ligne principale de télécommunication (1), chaque module comportant un desdits postes d'entrée (2,3,30,50,70,71,80) et un ou plusieurs desdits rupteurs, caractérisé en ce que dans le cas des consignes émises par un poste d'entrée à l'un desdits rupteurs dans le même module ledit moyen de commande est adapté pour transmettre ces consignes depuis le poste d'entrée audit rupteur sans entrée de la consigne sur la ligne principale de communication et suivant lequel dans le cas de consignes depuis un poste d'entrée à l'un desdits rupteurs d'un module différent, ledit moyen de commande est adapté pour l'entrée de la consigne sur la ligne principale de communication.

2. Appareil selon la revendication 1 selon lequel quelques uns des modules (a,b,c,d,e) au minimum comportent un ou plusieurs sous-modules et moyens de commande, suivant lequel ledit réseau est formé à partir d'une structure à branches.

3. Appareil selon la revendication 1 ou 2 dont les communications sont transmises en mode asynchrone.

4. Appareil selon la revendication 3 suivant lequel le messages sont transmis sur ledit réseau soit en un premier protocole soit en un deuxième protocole, ledit premier protocole étant plus court que le deuxième protocole et servant aux messages de plus grande urgence.

5. Appareil selon la revendication 4 suivant laquelle la transmission asynchrone est effectuée selon des régimes dans la fourchette de 50 à 56 bauds sous forme d'inversion logique pour attirer l'attention suivie d'une transmission de premier protocole comportant onze octets dont un octet de démarrage, deux octets d'identification de source, deux octets d'identification de destination, deux octets de consignes d'ordre ou de demande, deux octets de données de renseignement, un octet de vérification de redondance cyclique et un octet de fin.

6. Appareil selon la revendication 4 dans laquelle la transmission asynchrone est effectuée à des régimes dans la fourchette de 50 à 56 bauds sous forme d'une inversion- logique pour attirer l'attention suivie d'un deuxième protocole de trente quatre octets comportant vingt et un octets de renseignements.

7. Appareil selon l'une ou l'autre des revendications précédentes y compris un moyen indicateur d'état de rupteur électrique pour indiquer l'état des rupteurs électriques raccordés au réseau.

8. Appareil selon l'une ou l'autre des revendications précédentes comportant des moyens de raccord à une ligne extérieure de communication de telle façon à permettre à l'appareil de recevoir des consignes depuis la ligne de communication extérieure et l'entrée des consignes dans le réseau.

9. Appareil selon la revendication 8 suivant laquelle ladite ligne extérieure de communication comporte une ligne de téléphone raccordée en direct, un téléphone à distance ou un raccord d'ordinateur.

10. Appareil selon l'une ou l'autre des revendications précédentes suivant laquelle chaque poste d'entrée comporte une dalle numérique (90) qui consiste de touches d'entrée de consigne sur le réseau et un témoin (401) associé à chaque touche de la dalle numérique pour indiquer l'état des rupteurs électriques dans le même module que ledit poste d'entrée.

11. Appareil selon l'une ou l'autre des revendications précédentes suivant laquelle chaque poste d'entrée de consigne est programmable indépendamment pour mettre en mémoire les consignes complexes susceptibles de rappel à la réception d'une simple consigne reçue soit directement au même poste d'entrée de consigne soit par l'intermédiaire d'une consigne reçue du réseau.

12. Appareil selon l'une ou l'autre des revendications précédentes suivant laquelle l'un desdits postes d'entrée de consigne comporte un téléphone (91) ayant une dalle numérique qui consiste de touches pour l'entrée de consignes sur le réseau et un témoin (401) associé chaque touche de la dallé numérique pour indiquer l'état des rupteurs électriques de l'appareil.
